# EUROPEAN PATENT SPECIFICATION

(11) **EP 2 380 713 B1**
(45) Date of publication and mention of the grant of the patent: **20.05.2015**
(21) Application number: 09830474.4
(22) Date of filing: 04.12.2009
(51) Int. Cl.: B25J 15/08

(54) **ROBOT HAND**
ROBOTERHAND
MAIN DE ROBOT

(30) Priority: 04.12.2008 JP 2008309848; 26.12.2008 JP 2008333225
(43) Date of publication of application: 26.10.2011
(73) Proprietor: Kawasaki Jukogyo Kabushiki Kaisha, Kobe-shi, Hyogo 650-8670 (JP)
(72) Inventor: KAMON Masayuki, Akashi-shi Hyogo 673-8666 (JP); TAKAYAMA Yuuki, Akashi-shi Hyogo 673-8666 (JP)
(74) Representative: Charlton, Peter John
(86) International application number: PCT/JP2009/070411
(87) International publication number: WO 2010/064708

(56) References cited:
- JP-A- 59 146 783
- JP-A- 2001 029 411
- JP-A- 2004 041 279
- JP-A- 2007 237 341
- JP-A- 2007 290 044
- JP-T- 2003 534 930
- US-A- 5 437 490

## Description

### TECHNICAL FIEXLD

The present invention relates to a robot hand including a plurality of fingers.

### BACKGROUND ART

A robot hand has been known for grasping a work to be processed and taking out the same from a storage place in a manufacturing place or the like. There are many kinds of mechanism for this robot hand. For example, there is a coordinately driven hand in which a pair of fingers are driven by a single motor. Moreover, there is hand having a single shaft parallel link in which one driving shaft is provided to one finger. However, there is a problem in the coordinately driven hand that when a heavy work is not placed in the middle position between the pair of fingers, one of the fingers abuts against the work in advance so as to make the motor unmovable due to the resistance force from the work. As a result, the robot hand cannot securely grasp the work. Moreover, there is a problem in the hand having the single shaft parallel link that, although a rectangular work can be securely grasped, a round work cannot be securely grasped since the pair of fingers are moved close to or away from each other while keeping the fingers in the parallel relationship.

In these years, taking into account the above-mentioned problems, there is an increasing need for a multi-shaft parallel link hand in which one finger is provided with a plurality of drive shafts respectively driven by a plurality of motors. The multi-shaft parallel link hand makes it possible that works of many kinds of shapes can be securely held by changing the shapes of fingers so as to follow the shape of work. However, the plurality of drive shafts need to be individually controlled in accordance with the shape of work so that the control thereof becomes inevitably complicated. Therefore, there is provided a serial-type robot hand in which a plurality of drive shafts for respectively driving a plurality of joints constituting a finger are coordinately moved in a mechanical way so that a single motor drives the plurality of joints. (See, for example, Japanese Patent No. 3179464.) This robot hand makes it possible that the shape of the finger can be changed to follow the shape of work without performing any complicated controls.

By the way, when works are randomly stacked, or works are contained in a box with compartments, the fingertips of the robot hand need to be inserted into the narrow gaps in order to grasp the work and take out the same. However, in the serial-type robot hand, when the fingers perform a grasping motion, the fingertip side joint is inevitably moved coordinately with the motion of the joint at the finger root side in a mechanical way. Accordingly, the fingers have to be inserted into the gaps with their fingertips bent so that the operations of the robot may become difficult. Therefore, it is desired that even when a plurality of joints are driven by a single motor, the finger root side joint and the fingertip side joint can be individually driven without coordinately moving the same so that the fingertip is not bent when the finger root side joint is operated.

Moreover, in a hand disclosed in JP2002-103269A, an input power is transmitted to a plurality of fingers via respective routes so that even when one of the fingers has been made unmovable, the remaining fingers can be continuously provided with power. Thereby, even when one finger abuts against the work in advance and stops, the remaining fingers continue to move until they abut against the work so that the work can be securely grasped.

By the way, it is desired that the cycle time of operations performed by a robot hand is shortened. The moving speed of finger can be simply increased by decreasing the reduction ratio of the power transmitted from the motor to the finger. But, the grasping force (torque) with which the fingers grasp the work will be decreased when the reduction ratio is decreased.

Moreover, when an operator-robot cooperative operation is performed, the position of the work may be adjusted by manually pushing the work which is grasped by the robot hand. Accordingly, an external force by the operator is transmitted to the fingers via the work so that the grasping forces of respective fingers will be made non-uniform. In this case, complicated operations will be inevitably required for performing flexible grasping motions while keeping the grasping forces of fingers uniform.

JP 2004 041279A discloses a light-weight electric artificial hand which can grip in a secure position by a combined four-joint link and a planetary gear device. The planetary gear includes a finger which is driven, the driven finger having three joints and three finger elements.

### DISCLOSURE OF THE INVENTION

Therefore, the present invention according to the first aspect is intended to make it possible that a finger is bent from the finger root to the fingertip in this order with a simple constitution.

Moreover, the present invention according to the second aspect is intended to shorten the operational time in a simple way without decreasing the grasping force so that flexible grasping motions can be performed.

The present invention according to the first aspect has been made taking into account the above-mentioned situations. The robot hand according to the present invention includes a planetary gear unit to which a rotational power from a power source is input; first and second drive shafts to which a rotational power output from the planetary gear unit is transmitted; and a finger including a first joint driven by the first drive shaft, a first finger element mounted on a fingertip side of the first joint, a second joint mounted on a fingertip side of the first finger element and driven by the second drive shaft, and a second finger element mounted on a fingertip side of the second joint; wherein the planetary gear unit includes a sun gear, a planetary gear meshing with external teeth of the sun gear, a planetary arm connected to the planetary gear so as to move coordinately with a rotation of the planetary gear around the sun gear, an internal gear meshing with external teeth of the planetary gear so as to move coordinately with a rotation of the planetary gear on its own axis, wherein one of the sun gear, the planetary arm and the internal gear is used as a power input part, and remaining two thereof are respectively used as a first power output part and a second power output part, wherein the power input part is connected to the power source in a way that a power can be transmitted, wherein the first power output part is connected to the first drive shaft in a way that a power can be transmitted, wherein the second power output part is connected to the second drive shaft in a way that a power can be transmitted, and wherein the robot hand is further provided with a resistance generating unit configured to make a motion resistance of the second power output part lager than a motion resistance of the first power output part.

According to the aforementioned constitution, a rotational power, which has been input into the power input part of the planetary gear unit, is split and supplied to the first power output part and the second power output part. Accordingly, even when one of the first power output part and the second power output part has been made impossible to rotate, the first drive shaft and the second drive shaft can rotate individually since the other power output part can rotate. The rotational movement of the first power output part is caused prior to the rotational movement of the second power output part since the motion resistance of the second power output part is larger than the motion resistance of the first power output part. Therefore, only by transmitting the rotational power from the power source to the power input part, the first joint moves prior to the movement of the second joint so that the first finger element moves prior to the movement of the second finger element. Accordingly, it is be possible to perform an operation in which the finger is bent from the finger root to the fingertip in this order without performing any special controls.

Preferably, the motion resistances are set in a way that the second power output part will become movable after the first power output part has become unmovable, wherein when the rotational power is transmitted to the power input part, the second finger element will move toward a work after the first finger element has become unmovable due to a resistance force from the work.

According to the aforementioned constitution, the second joint is not driven and the second finger element at the fingertip side does not move when the first joint is driven so that the first finger element at the finger root side moves. Therefore, it will become easier to insert the fingers into narrow gaps when the fingers are grasping the work. Accordingly, it will be easy to grasp and take out works which are randomly stacked or contained in a box with compartments. Moreover, it will be possible to securely hold works with various shapes since the second finger element on the fingertip side will grasp the work after the first finger element at the finger root side has grasped the work so that the finger can change its shape so as to follow the shape of the work.

Preferably, the resistance generating unit is configured by setting a power transmitting resistance in a second power transmitting mechanism from the second power output part to the second drive shaft larger than a power transmitting resistance in a first power transmitting mechanism from the first power output part to the first drive shaft.

According to the aforementioned constitution, it is possible to easily make the motion resistance of the second power output part lager than the motion resistance of the first power output part only by making the power transmitting resistance in the first power transmitting mechanism different from the power transmitting resistance in the second power transmitting mechanism. For example, the number of gears used in the first power transmitting mechanism may be different from the number of gears used in the second power transmitting mechanism.

Preferably, the resistance generating unit comprises a ball plunger configured to apply a contact resistance to a member existing in a power transmitting mechanism from the second power output part to the second drive shaft.

According to the aforementioned constitution, the ball of the ball plunger is made contact with a member existing in the power transmitting route from the second power output part to the second drive shaft so that a given motion resistance can be easily applied to the second power output part. Additionally, the member existing in the power transmitting route can be prevented from being worn since the ball of the ball plunger will rotationally move.

Preferably, the resistance generating unit comprises a spring configured to apply a rotational resistance to a member existing in a power transmitting mechanism from the second power output part to the second drive shaft.

According to the aforementioned constitution, a motion resistance can be easily applied to the second power output part with a low cost by applying a rotational resistance with an elastic force of the spring to the member existing in the power transmitting route from the second power output part to the second drive shaft.

Preferably, a second planetary gear unit is disposed between the first or second power output part and the first or second drive shaft, wherein the first or second power output part is connected to a power input part of the second planetary gear unit in a way that a power can be transmitted, wherein the first or second drive shaft is connected to a first power output part of the second planetary gear unit in a way that a power can be transmitted, wherein a third drive shaft is connected to a second power output part of the second planetary gear unit in a way that a power can be transmitted.

According to the aforementioned constitution, the rotational power from a single power source is split into three portions since two planetary gear units are serially disposed. Thereby, the first to third drive shafts can be independently driven respectively by the rotational power from the single power source.

As apparent from the explanations mentioned above, the present invention according to the first aspect makes it possible that a finger is bent from the finger root to the fingertip in this order without performing any special controls.

The present invention according to the second aspect has been made taking into account the above-mentioned situations. The robot hand according to the present invention includes a plurality of fingers; and a plurality of planetary gear units configured to respectively transmit powers to the plurality of fingers, wherein the planetary gear unit includes a sun gear, a planetary gear meshing with external teeth of the sun gear, a planetary arm connected to the planetary gear so as to move coordinately with a rotation of the planetary gear around the sun gear, an internal gear meshing with external teeth of the planetary gear so as to move coordinately with a rotation of the planetary gear on its own axis, wherein one of the sun gear, the planetary arm and the internal gear is used as a power input part, and remaining two thereof are respectively used as a first power output part and a second power output part, wherein the power input part of the plurality of planetary gear units is connected to a power source in a way that a power can be transmitted, the first power output part of one of the plurality of planetary gear units is connected to one of the plurality of fingers in a way that a power can be transmitted, the first power output part of another one of the plurality of planetary gear units is connected to another one of the plurality of fingers in a way that a power can be transmitted, wherein the second power output part of one of the plurality of planetary gear units is connected to the second power output part of another one of the plurality of planetary gear units such that the fingers move close to or away from each other by a transmitted power.

According to the aforementioned constitution, in a state that the plurality of fingers don't make contact with the work, the first power output parts of the plurality of planetary gear units respectively drive the plurality of fingers so that the fingers perform grasping motions. Namely, in a state that none of the fingers makes contact with the work, the fingers move at a normal speed so that positioning operations of the fingers can be made easily. On the other hand, when one of the plurality of fingers has made contact with the work, the first power output part of the planetary gear unit driving the concerned finger stops and the second power output part will rotationally move. The rotational power of the second power output part is transmitted to the second power output part of another planetary gear unit so as to be added to the rotational power of the first power output part of another planetary gear unit. Namely, when one of the plurality of fingers has made contact with the work, the other finger will be automatically driven at a speed higher than before without performing any special controls so as to complete the grasping motion for the work with all fingers.

Therefore, in the case that the rotational power from the driving source is reduced with reduction gears, the reduction ratio don't need to be decreased in order to increase the moving speed of the fingers. As a result, the operational time can be easily shortened without decreasing the force (torque) of the fingers for grasping the work. Moreover, according to this mechanism, when some external force is applied to a finger which grasps the work, the power is transmitted from the second power output part of the planetary gear unit corresponding to the concerned finger to the second power output part of another planetary gear unit. Thereby, the grasping forces of respective fingers can be automatically kept uniform without performing any special controls. Therefore, for example, in an operator-robot cooperative operation, when the operator presses the work grasped by the robot hand in order to adjust the position of the work, flexible grasping motions can be performed.

Preferably, the plurality of fingers include three or more fingers, wherein two or more planetary gear units are serially arranged per one finger, wherein the second power output part of one of serially arranged planetary gear units is connected to the second power output part of one of adjacent another serially arranged planetary gear units in a way that a power can be transmitted, wherein the second power output part of another one of the serially arranged planetary gear units is connected to the second power output part of one of oppositely adjacent still another serially arranged planetary gear units in a way that a power can be transmitted, wherein the second power output parts of the plurality of planetary gear units respectively driving the plurality of fingers are connected to each other in a way that a power can be circularly transmitted to each other.

According to the aforementioned constitution, even when there are three or more fingers, the operational time can be shortened with a simple constitution by serially connecting a plurality of planetary gear units per one finger, and connecting to each other the second power output parts of respective planetary gear units disposed per finger. Moreover, the second power output parts of respective planetary gear units disposed per finger are connected to each other in a cyclic way. Therefore, when two of three fingers have been stopped, both of the driving forces for the two fingers are added to the driving force for the remaining one finger. As a result, the moving speed of the finger can be increased just before completing the grasping motion.

Preferably, two serially arranged planetary gear units are arranged side by side in way that rotational shafts thereof are parallel and opposite to each other, and an external tooth part is integrally disposed on the second power output part, wherein the external tooth part of the second power output part of an upstream side planetary gear unit among the serially arranged planetary gear units meshes with the external tooth part of the second power output part of a downstream side planetary gear unit among adjacent still another serially arranged planetary gear units.

According to the aforementioned constitution, the entire length of the robot hand can be made smaller since two serially arranged planetary gear units are arranged side by side in a way that rotational shafts thereof are parallel and opposite to each other. Moreover, the number of gears used for transmitting a power can be decreased since the serially arranged planetary gear units are disposed opposite to each other and directly meshed with the external tooth part of the second power output part.

Preferably, the fingers and the planetary gear units driving the fingers are respectively disposed in an even number of four or more, wherein the second power output parts of four planetary gear units are connected in a way that a power can be circularly transmitted therethrough via intermediate gears.

According to the aforementioned constitution, the fingers and the planetary gear units are respectively disposed in an even number of four or more. Therefore, the robot hand can be made compact by easily connecting to each other the second power output parts via the intermediate gear such that the transmitted power moves the fingers close to or away from each other.

As apparent from the explanations mentioned above, the present invention according to the second aspect can make it possible to easily shorten the operational time without decreasing the grasping force and perform flexible grasping motions.

### BRIEF DESCRIPTION OF THE DRAWINGS

Fig. 1 is a plan view of a robot hand according to a first embodiment of the present invention according to the first aspect.
Fig. 2 is a sectional view along the II-II line in Fig. 1.
Fig. 3 is a sectional view along the III-III line in Fig. 1.
Fig. 4 is a schematic view of a planetary gear unit of the robot hand shown in Fig. 1.
Fig. 5 is a schematic sectional view of the planetary gear unit shown in Fig. 4.
Fig. 6 is an operational view showing the right half of the robot hand shown in Fig. 1.
Fig. 7 is a view corresponding to Fig. 3 and showing a robot hand according to a second embodiment of the present invention according to the first aspect.
Fig. 8 is a sectional view of a ball plunger of the robot hand shown in Fig. 7.
Fig. 9 is a schematic sectional view of planetary gear units of a robot hand according to a third embodiment of the present invention according to the first aspect.
Fig. 10 is a front view of a robot hand according to a fourth embodiment of the present invention according to the second aspect.
Fig. 11 is a sectional view along the XI-XI line in Fig. 10, showing a drive part of the robot hand.
Fig. 12 is a view for explaining the grasping motion of the robot hand shown in Fig. 10.
Fig. 13 is a top view of a robot hand according to a fifth embodiment of the present invention according to the second aspect.
Fig. 14 is a development view of the robot hand shown in Fig. 13.
Fig. 15 is a top view of a robot hand according to a sixth embodiment of the present invention according to the second aspect.
Fig. 16 is a development view of the robot hand shown in Fig. 15.
Fig. 17 is a top view of a robot hand according to a seventh embodiment of the present invention according to the second aspect.
Fig. 18 is a development view of the robot hand shown in Fig. 17.

### MODE FOR CARRYING OUT THE INVENTION

Referring to the drawings, the first to third embodiments of the present invention according to the first aspect will be explained hereunder.

### (First Embodiment)

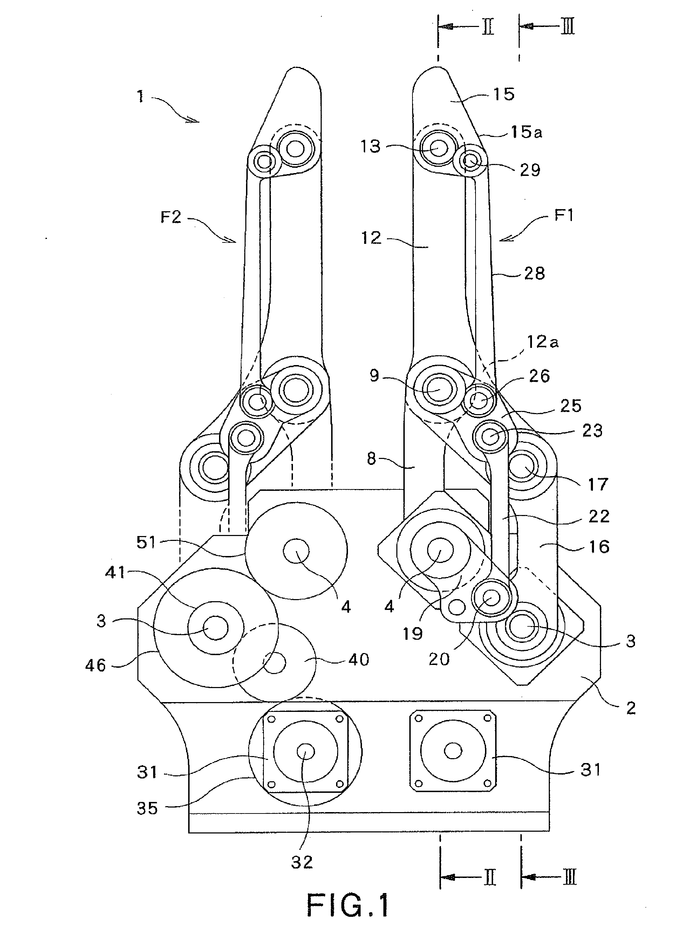

The robot hand 1 according to the first embodiment of the present invention according to the first aspect will be explained. As shown in Fig. 1, the robot hand 1 includes a casing 2, and a pair of left and right fingers F1, F2 mounted on the casing 2. The casing 2 is attached to the distal end of an arm of industrial robot (not shown). Incidentally, the left and right fingers F1, F2 have the substantially symmetrical constitutions, although Fig. 1 shows for an easier understanding in its right half mainly the link structure downstream of drive shafts 3, 4 of the finger F1 with respect to the power transmitting direction, and in its left half mainly the gear structure upstream of drive shafts 3, 4 of the finger F2 with respect to the power transmitting direction.

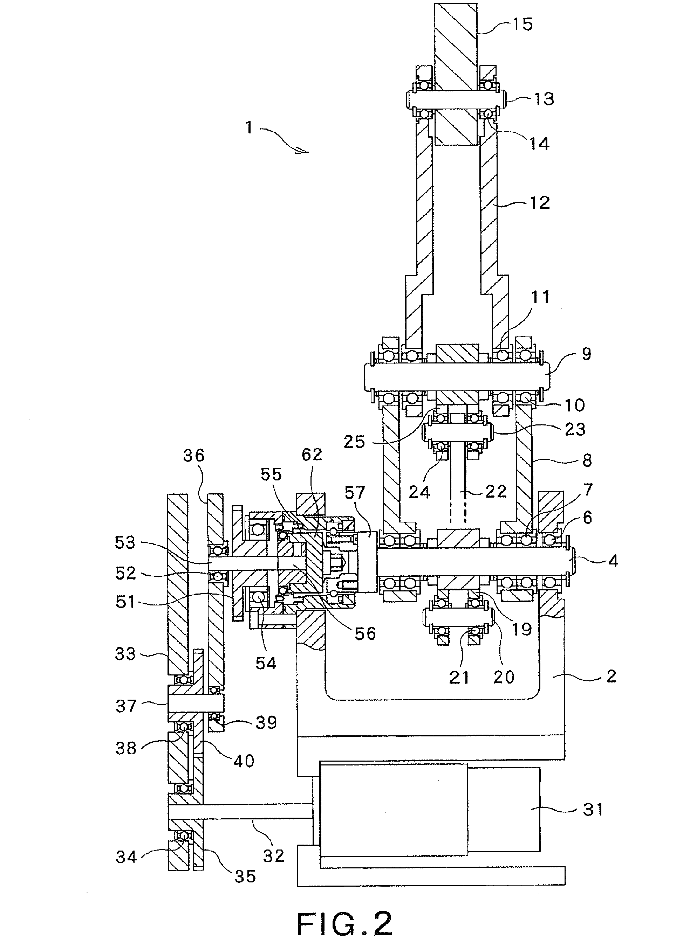

First of all, the link structures of the fingers F1, F2 will be explained. As shown in Figs. 1 and 2, the second drive shaft 4 is rotatably supported on the casing 2 via a bearing 6. One end of a finger root member 8 is rotatably supported on the second drive shaft 4 via a bearing 7. A first joint shaft 9 (first joint) is rotatably supported on the other end of the finger root member 8 via a bearing 10. A finger pulp member 12 (first finger element) is rotatably supported on the first joint shaft 9 via a bearing 11. The finger pulp member 12 has an obliquely bent shape in which its one end at the finger root side is away from the other finger F2. The first joint shaft 9 is supported on the bent portion 12a of the finger pulp member 12. A second joint shaft 13 (second joint) is rotatably supported on the other end of the finger pulp member 12 via a bearing 14. One end of a fingertip member 15 (second finger element) is rotatably supported on the second joint shaft 13.

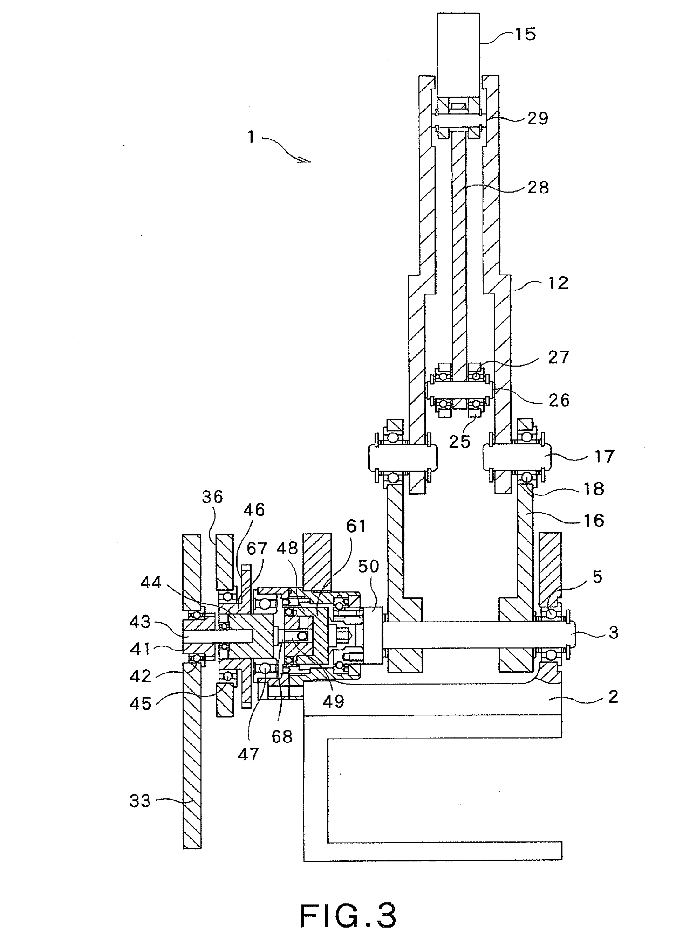

As shown in Figs. 1 and 3, the first drive shaft 3 is rotatably supported via a bearing 5 on the casing 2 at the side away from the fingertip of the finger F1 and also away from the other finger F2 with respect to the second drive shaft 4. The first drive shaft 3 is parallel with the second drive shaft 4. One end of a link member 16 having a plate shape is rotatably supported on the first drive shaft 3. A rotational shaft 17 is rotatably supported on the other end of the link member 16 via a bearing 18. One end of the finger pulp member 12 is rotatably supported on the rotational shaft 17.

As shown in Figs. 1 and 2, one end of a link member 19 is integrally connected to the second drive shaft 4. A rotational shaft 20 is rotatably supported on the other end of the link member 19 via a bearing 21. One end of a link member 22 is rotatably supported on the rotational shaft 20. A rotational shaft 23 is rotatably supported on the other end of the link member 22. One end of a link member 25 is rotatably supported on the rotational shaft 23 via a bearing 24. The other end of the link member 25 is rotatably supported on the first joint shaft 9.

As shown Figs. 1 and 3, a rotational shaft 26 is rotatably supported via a bearing 27 on the intermediate part of the link member 25. One end of the link member 28 is rotatably supported on the rotational shaft 26. The fingertip member 15 is rotatably supported on the other end of the link member 28 via a rotational shaft 29. The fingertip member 15 includes a protruding portion 15a which protrudes away from the other finger F2, and the rotational shaft 29 is supported on the protruding portion 15a.

According to the link structure mentioned above, for example, when the first drive shaft 3 of the right finger F1 rotates clockwise on Fig. 1, the link member 16 inclines clockwise so that the first joint having the first joint shaft 9 is being bent and the finger pulp member 12 is translated (i.e., a parallel displacement is performed) in the right direction. Moreover, when the second drive shaft 4 of the finger F1 rotates counterclockwise on Fig. 1, the link member 19 inclines counterclockwise and the fingertip member 15 inclines counterclockwise via the link members 22, 25, 28.

Next, the gear structure of the fingers F1, F2 will be explained. As shown in Figs. 1 and 2, motors 31 (power source) are attached to the casing 2. Each of the motors 31 has an output shaft 32 which is substantially parallel with the first and second drive shafts 3, 4. The motors 31 are connected to a controller (not shown) so that the motors 31 are driven by instructions from the controller. A first gear 35 is rotatably supported on a casing 33 via a bearing 34 and is fixed to the output shaft 32 of the motor 32. The first gear 35 is meshed with a second gear 40 which is rotatably supported on the casing 33 via a bearing 38. A gear shaft 37 is fixed to the center of the second gear 40. The gear shaft 37 is rotatably supported on a casing 36 via a bearing 39.

As shown in Figs. 1 and 3, the second gear 40 is meshed with a third gear 41 which is rotatably supported on the casing 33 via a bearing 42. A gear shaft 43 is fixed to the center of the third gear 41, and the gear shaft 43 is connected to a planetary gear unit 44 supported on the casings 2, 36 as an input shaft.

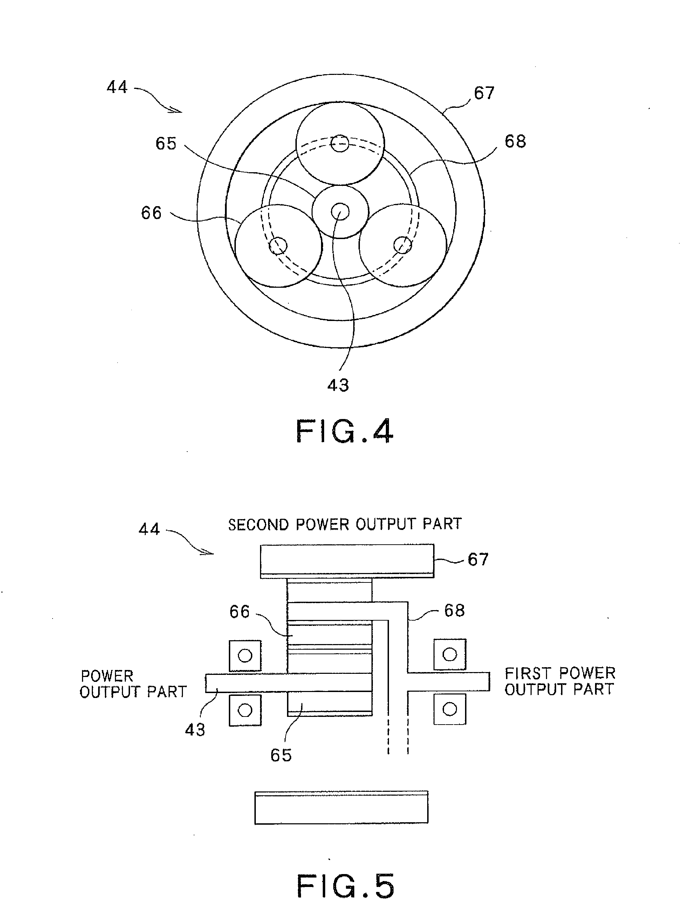

Fig. 4 is a schematic view of the planetary gear unit 44 of the robot hand 1 shown in Fig. 1. As shown in Figs. 4 and 5, the planetary gear unit 44 includes a sun gear 65, a plurality of planetary gears 66, a planetary arm 68, and an internal gear 67. The gear shaft 43 is integrally connected to the sun gear 65 as an input shaft. The plurality of planetary gears 66 mesh with external teeth of the sun gear 65. The planetary arm 68 is connected to the planetary gears 66 so as to move coordinately with a rotation of the planetary gears 66 around the sun gear 65. The internal gear 67 meshes with external teeth of the planetary gears 66 so as to move coordinately with rotations of the planetary gears 66 on their own axes. The sun gear 65 is used as a power input part. The planetary arm 68 is used as a first power output part. The internal gear 67 is used as a second power output part.

Referring again to Fig. 3, an input part 49 of a first wave reduction gear 48 is integrally connected to the planetary arm 68 of the planetary gear unit 44. An output part 50 of the first wave reduction gear 48 is integrally connected to the first drive shaft 3. A fourth gear 46, which is rotatably supported on the casing 36 via a bearing 45, is externally and integrally fitted with the internal gear 67 of the planetary gear unit 44 (refer to Figs. 4 and 5). The fourth gear 46 is meshed with a fifth gear 51 (refer to Fig. 2). As shown in Fig. 2, a gear shaft 53 is fixed to the center of the fifth gear 51. The gear shaft 53 is supported on the casing 36 via a bearing 52. An input part 56 of a second wave reduction gear 55 is integrally connected to the gear shaft 53. An output part 57 of the second wave reduction gear 55 is integrally connected to the second drive shaft 4.

According to the gear structure mentioned above, a rotational power from the motor 31 is input into the sun gear 65 of the planetary gear unit 44 via the first to third gears 35, 40, 41 and the gear shaft 43. The rotational power of the sun gear 65 is split into the planetary arm 68 and the internal gear 67 in the planetary gear unit 44. Then, the rotational power of the planetary arm 69 rotationally drives the first drive shaft 3 via a first power transmitting mechanism 61 including the first wave reduction gear 48. Then, the rotational power of the internal gear 67 rotationally drives the second drive shaft 4 via a second power transmitting mechanism 62 including the fourth gear 46, the fifth gear 51 and the second wave reduction gear 48. Namely, in comparison to the first power transmitting mechanism 61, the second power transmitting mechanism 62 is provided with more gears (e.g., the fourth gear 46) which function as transmitting resistances. As a result, the power transmitting resistance of the second power transmitting mechanism 62 becomes larger than the power transmitting resistance of the first power transmitting mechanism 61. Thereby, a resistance generating unit is constituted for making the motion resistance of the internal gear 67 larger than the motion resistance of the planetary arm 68.

As a result, when a load is not applied to the planetary arm 68 (for example, a reaction force from the work or the like is not applied to the finger pulp member 12 which is connected to the planetary arm 68 in a way that a power can be transmitted), all of the rotational power of the sun gear 65 is transmitted to the planetary arm 68 so that the internal gear 67 does not rotate. Namely, in a state that the second drive shaft 4 does not rotate and the fingertip member 15 does not incline, the first drive shaft 3 rotates so that the finger pulp member 12 translates. On the other hand, in a state that a load is applied to the planetary arm 68 (for example, a reaction force from the work or the like is applied to the finger pulp member 12 which is connected to the planetary arm 68 in a way that a power can be transmitted), when the load exceeds the power transmitting resistance of the second power transmitting mechanism 62, the internal gear 67 starts rotating. Thereby, the rotational power of the sun gear 65 is split into the internal gear 67. Then, the second drive shaft 4 is rotationally driven so that the fingertip member 15 inclines.

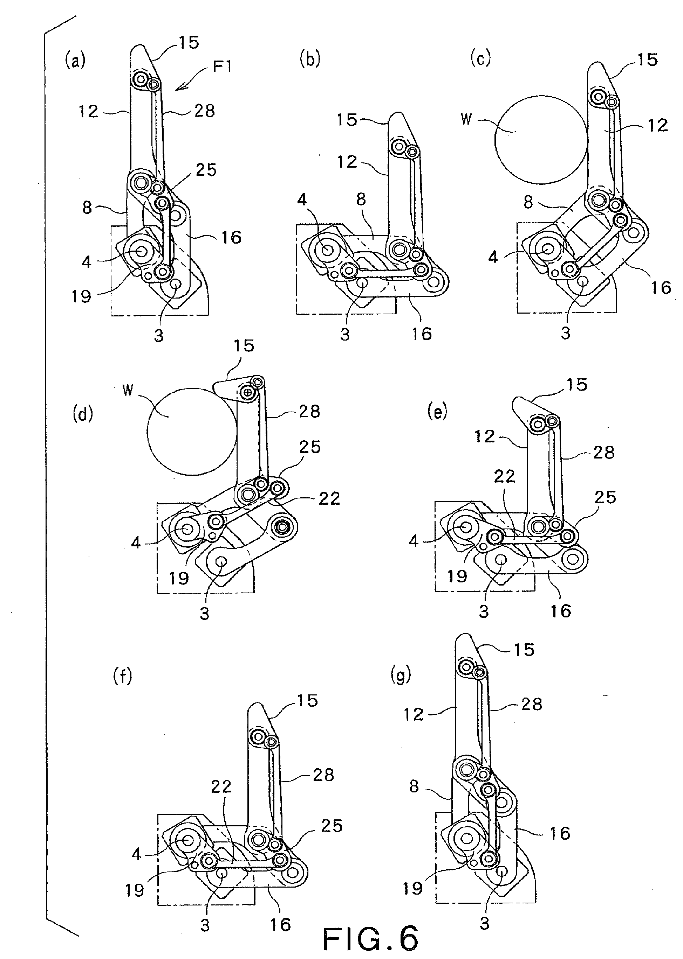

Next, a work grasping motion of the robot hand 1 will be explained. Fig. 6 is an operational view showing the right half of the robot hand shown in Fig. 1. As shown in Fig.6(a), in the initial state, the robot hand 1 is set in the finger closed state that the finger root member 8 of the finger F1, the finger pulp member 12 and the fingertip member 15 are arranged in a straight line. Next, as shown in Fig.6(b), when an instruction to open the fingers is provided from the controller (not shown) to the motor 31 (refer to Fig. 1, etc.), the first drive shaft 3 rotates clockwise while the second drive shaft 4 does not rotate due to the motion resistance of the internal gear 67 (refer to Fig. 3). Then, the finger pulp member 12 and the fingertip member 15 translate while keeping their straight line state so as to move away from the other finger F2 (refer to Fig. 1), and stop at the maximum open position in which the finger pulp member 12 is perpendicular to the finger root member 8.

Next, as shown in Fig. 6(c), when an instruction to close the fingers is provided from the controller (not shown) to the motor 31 (refer to Fig. 1, etc.), the first drive shaft 3 rotates counterclockwise while the second drive shaft 4 does not rotate since the power transmitting resistance of the second power transmitting mechanism 62 is larger than the power transmitting resistance of the first power transmitting mechanism 61. Then, the finger pulp member 12 and the fingertip member 15 translate while keeping their straight line state so as to move close to the other finger F2 (refer to Fig. 1), and the finger pulp member 12 abuts against the work W. At the same time, although not shown in Fig. 6, the finger pulp member 12 of the other finger F2 (refer to Fig. 1) also abuts against the other side of the work W.

Next, as shown in Fig. 6(d), when the finger pulp member 12 is made to be unable to move any more due to the reaction force from the work W, the torque of the fourth gear 46 (refer to Fig. 3) exceeds the power transmitting resistance of the second power transmitting mechanism 62. Thereby, the second drive shaft 4 is made to rotate counterclockwise. Then, the fingertip member 15 inclines toward the other finger F2 (refer to Fig. 1) so as to approach the work W and abut against the same. As a result, the finger F1 follows the shape of the work W so as to grasp the same. In this grasping state, the arm of industrial robot having the robot hand attached thereto is operated to transfer the work W to a desired place.

Next, as shown in Fig. 6(e), when an instruction to open the fingers is provided from the controller (not shown) to the motor 31 (refer to Fig. 1, etc.), the first drive shaft 3 rotates clockwise so that the finger pulp member 12 and the fingertip member 15 translate so as to move away from the other finger F2 (refer to Fig. 1) and stop at the maximum open position in which the finger pulp member 12 is perpendicular to the finger root member 8. At this time, although the second drive shaft 4 is hard to rotate due to the power transmitting resistance of the second power transmitting mechanism 62, the fingertip member 15 becomes a state in which the fingertip member 15 is opened to some extent due to a link interference.

Next, as shown in Fig. 6(f), when the motor 31 (refer to Fig. 1) is continuously driven in the opening direction, the torque of the fourth gear 46 (refer to Fig. 3) increases since the finger pulp member 12 cannot move any more at the maximum opening position. Then, the torque of the fourth gear 46 exceeds the power transmitting resistance of the second power transmitting mechanism 62 so that the second drive shaft 4 rotates clockwise until the fingertip member 15 is positioned in a straight line with the finger pulp member 12. Next, as shown in Fig. 6(g), an instruction to close the fingers is provided from the controller (not shown) to the motor (refer to Fig. 1, etc.) so as to return to the initial state.

According to the constitution mentioned above, the rotational power input into the sun gear 65 of the planetary gear unit 44 is split into the planetary arm 68 and the internal gear 67, and the internal gear 67 can rotate even when the planetary arm 68 has become unable to rotate so that the first drive shaft 3 and the second drive shaft 4 can individually rotate. Moreover, the rotational motion of the planetary arm 68 is caused prior to the rotational motion of the internal gear 67 since the power transmitting resistance in the second power transmitting mechanism 62 from the internal gear 67 to the second drive shaft 4 is larger than the power transmitting resistance in the first power transmitting mechanism 61 from the planetary arm 68 to the first drive shaft 3. Then, the finger pulp member 12 is moved prior to moving the fingertip member 14 only by transmitting the rotational power from the motor 31 to the sun gear 65. Therefore, the first joint shaft 9 can be moved prior to moving the second joint shaft 13 without performing any special controls so as to make it possible that the fingers F1, F2 are bent from the finger root to the fingertip in this order.

Moreover, the second joint shaft 13 is not driven and the fingertip member 15 does not move even when the first joint shaft 9 is driven and the finger pulp member 12 moves. As a result, the fingers F1, F2 can be easily inserted into narrow gaps when grasping the work W with the fingers F1, F2. Therefore, it is easy to grasp and take out works which are randomly stacked or contained in a box with compartments. Moreover, it is possible to securely hold works W of many kinds of shapes since the fingertip members 15 grasp the work W after the finger pulp members 12 have grasped the work W so that the fingers F1, F2 change their shapes so as to follow the shape of work.

### (Second Embodiment)

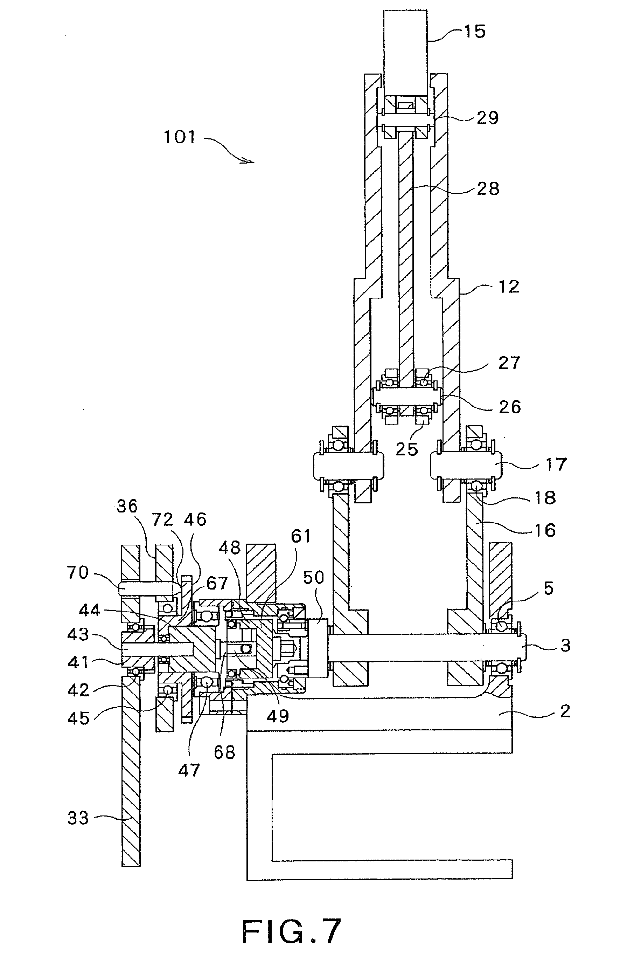

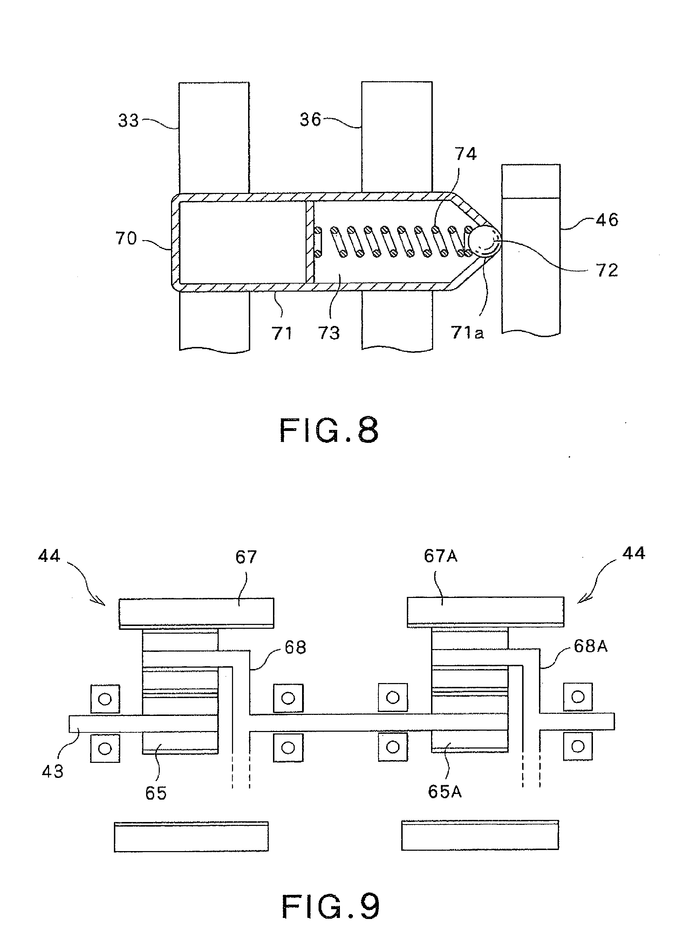

Fig. 7 is a view corresponding to Fig. 3 and showing a robot hand 101 according to the second embodiment of the present invention according to the first aspect. Fig. 8 is a sectional view of a ball plunger 70 of the robot hand 101 shown in Fig. 7. Incidentally, the constitution of the second embodiment identical with the constitution of the first embodiment will not be explained, and the same reference numerals will be provided thereto. As shown in Figs. 7 and 8, in the present embodiment, the ball plunger 70 is disposed as a resistance generating unit which makes the motion resistance of the internal gear 67 larger than the motion resistance of the planetary arm 68. The ball plunger 70 is pressed against the fourth gear 46 so as to provide a contact resistance to the internal gear 67 which moves coordinately with the fourth gear 46.

The ball plunger 70 includes a housing 71 having a spring containing space 73, an opening part 71a provided to the distal end of the housing 71, a ball 72 having an outer diameter which is larger than the inner diameter of the opening part 71a, a coil spring 74 disposed in the spring containing space 73 to press the ball 72 so that a part of the ball 72 protrudes from the opening part 71a. The ball 72 is rotatably disposed and is able to protrude or retract from the opening part 71a. In the ball plunger 70, the housing 71 is fixed to the casings 33, 36. The ball 72 is pressed against the surface of the fourth gear 46 perpendicular to the rotational axis of the fourth gear 46 by means of the elastic force of the coil spring 74. Thereby, the fourth gear 46 is provided with a rotational resistance by the pressure from the ball 72 so that the motion resistance of the internal gear 67 is made larger than the motion resistance of the planetary arm 68.

In a state that a load is not applied to the planetary arm 68 (for example, a reaction force from the work or the like is not applied to the finger pulp member 12 which is connected to the planetary arm 68 in a way that a power can be transmitted), all of the rotational power of the sun gear 65 is transmitted to the planetary arm 68 so that the internal gear 67 does not rotate. Namely, in a state that the second drive shaft 4 does not rotate and the fingertip member 15 does not incline, the first drive shaft 3 rotates so that the finger pulp member 12 translates. On the other hand, in a state that a load is applied to the planetary arm 68 (for example, a reaction force from the work or the like is applied to the finger pulp member 12 which is connected to the planetary arm 68 in a way that a power can be transmitted), when the load exceeds the pressing force applied from the ball 72 of the ball plunger 70 to the fourth gear 46, the fourth gear 46 starts rotating. Thereby, the rotational power of the sun gear 65 is split into the internal gear 67, and the second drive shaft 4 is rotationally driven so that the fingertip member 15 inclines. At this time, the fourth gear 46 is prevented from being worn since the ball 72 of the ball plunger 70 rotates on the fourth gear 46 while making contact with the same.

Incidentally, the other constitution is identical with the first embodiment so that the explanations thereof will be omitted. Moreover, in the present invention, the ball plunger 70 as the resistance generating unit abuts against the fourth gear 46 to provide the contacting resistance. However, any other members (e.g., the fifth gear 51) can be abutted by the ball plunger to provide the contacting resistance as long as the concerned member exists in the power transmitting mechanism from the internal gear 67 to the second drive shaft 4. Instead of the ball plunger 70, a coil spring 115 as the resistance generating unit may be provided to a rotational member (e.g., the gear shaft 53 fixed to the center of the fifth gear 51) which exists in the power transmitting route from the internal gear 67 to the second drive shaft 4. The elastic force of the coil spring 115 provides a rotational resistance to the rotational member (e.g, the gear 53) so as to make the motion resistance of the internal gear 67 which moves coordinately with the gear shaft 53 larger than the motion resistance of the planetary arm 68.

### (Third Embodiment)

Fig. 9 is a schematic sectional view of planetary gear units 44, 44A of a robot hand according to the third embodiment of the present invention according to the first aspect. As shown in Fig. 9, the robot hand of the present embodiment has a constitution in which the rotational power is split into three portions by connecting the planetary gear units 44, 44A in two stages. Concretely, the planetary arm 68 of the first planetary gear unit 44 is connected as an input shaft to the sun gear 65A of the second planetary gear unit 44A. Then, the first drive shaft (not shown) is connected to the internal gear 67 of the first planetary gear unit 44 in a way that the power can be transmitted. The second drive shaft (not shown) is connected to the planetary arm 68A of the second planetary gear unit 44A in a way that a power can be transmitted. The third drive shaft (not shown) is connected to the internal gear 67A of the second planetary gear unit 44A in a way that a power can be transmitted.

The first to third drive shafts are configured to drive respectively the first to third joints (not shown) included in one finger and are disposed at the first, second and third joints toward the fingertip side in this order. The internal gear 67 of the first planetary gear unit 44 is connected to the first drive shaft which drives the first joint. The planetary arm 68A of the second planetary gear unit 44A is connected to the second drive shaft which drives the second joint. The internal gear 67A of the second planetary gear unit 44A is connected to the third drive shaft which drives the third joint. The motion resistances will become lager from the internal gear 67 of the first planetary gear unit 44, the planetary arm 68A of the second planetary gear unit 44A, and the internal gear 67A of the second planetary gear unit 44A in this order. Incidentally, the motion resistances can be easily adjusted as mentioned above by changing the number of gears, or using the ball plunger or spring.

According to such a constitution, since two planetary gear units 44, 44A are serially disposed, the rotational power from one motor is split into three portions so that the first to third drive axes can be independently driven with the rotational power from one motor. By adjusting the resistance to each split power, even when one finger includes three or more joints, the finger can be bent from the finger root to the fingertip in this order without performing any special controls.

Referring to the drawings, the fourth to seventh embodiments of the present invention according to the second aspect will be explained hereunder.

### (Fourth Embodiment)

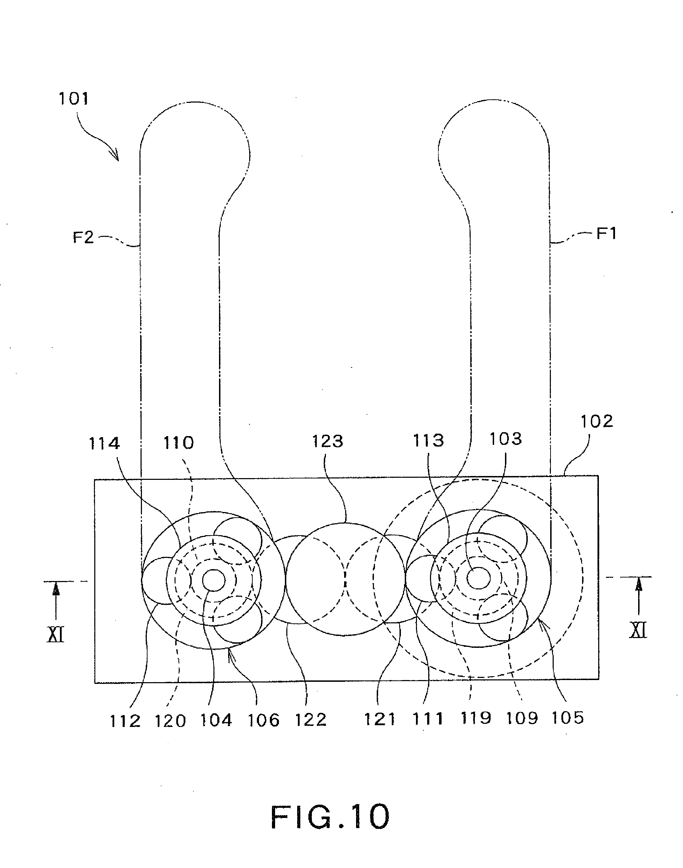

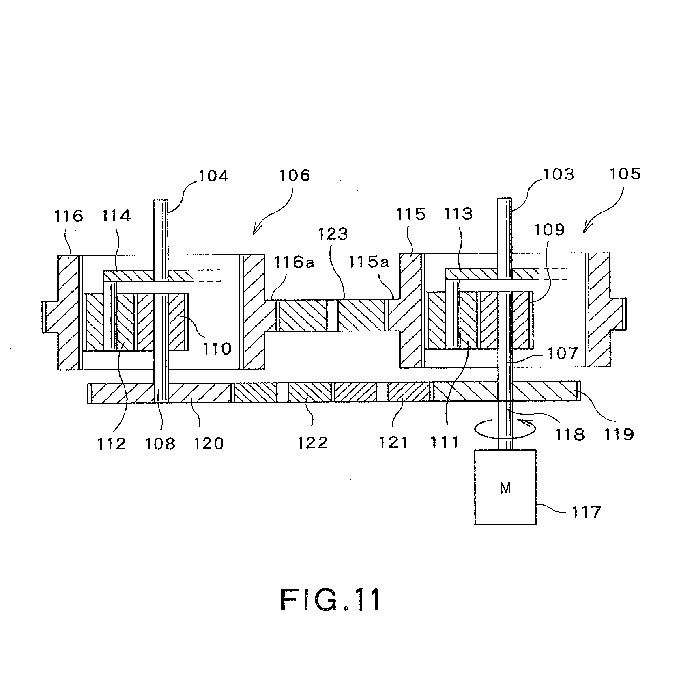

Fig. 10 is a front view of a robot hand 101 according to the fourth embodiment of the present invention according to the second aspect. Fig. 11 is a sectional view along the XI-XI line in Fig. 10, showing a drive part of the robot hand 101. As shown in Figs. 10 and 11, the robot hand 101 includes a casing 102, a pair of left and right fingers F1, F2 disposed on the casing 102. The casing 102 is to be attached to the distal end of the arm of industrial robot (not shown).

The root parts of the fingers F1, F2 are provided with a pair of left and right drive shafts 103, 104 which are configured to move the fingers F1, F2 close to or away from each other. The drive shafts 103, 104 are respectively connected to a pair of left and right planetary gear units 105, 106 for transmitting a rotational force from a motor 117 as a power source.

The planetary gear units 105, 106 include sun gears 109, 110, a plurality of planetary gears 111, 112 meshing with external teeth of the sun gears 109, 110, planetary arms 113, 114 connected to the planetary gears 111, 112 so as to coordinately rotate with the rotation of the planetary gears 111, 112 around the sun gears 109, 110, and internal gears 115, 116 meshing with external teeth of the planetary gears 111, 112 so as to coordinately rotate with the rotations of the planetary gears 111, 112 on their axes. The sun gears 109, 110 are used as power input parts. The planetary arms 113, 114 are used as first power output parts. The internal gears 115, 116 are used as second power output parts.

The sun gears 109, 110 are integrally provided with input shafts 107, 108. An output shaft 118 of the motor 117 is integrally connected to the input shaft 107 of the right planetary gear unit 105. External gears 119, 120 are integrally and externally fitted with the input shafts 107, 108. Intermediate gears 121, 122 of an even number (which is two in Figs. 10 and 11) are meshed with both the right external gear 119 and the left external gear 120 so that the rotational power is transmitted from the external gear 119 to the external gear 120 in a way that their rotations are opposite to each other. Incidentally, two external gears 119, 120 may be meshed directly with each other without providing the intermediate gears 121, 122.

The internal gears 115, 116 are integrally provided with external tooth parts 115a, 116a at their external peripheries. An intermediate gear 123 of an odd number (which is one in Figs. 10 and 11) is meshed with both the external tooth part 115a of the right internal gear 115 and the external tooth part 116a of the left internal gear 116. Thereby, the power can be transmitted in a way that the right internal gear 115 and the left internal gear 116 rotate in the same direction.

The motion resistances of the internal gears 115, 116 are made larger than the motion resistances of the planetary arms 113, 114 as the first power output parts since the intermediate gear 123 is meshed with the internal gears 115, 116 as the second power output parts. As a result, when external loads are not applied to the planetary arms 113, 114 (for example, reaction forces from the work or the like are not applied to the fingers F1, F2 which are connected to the planetary arms 113, 114 in a way that powers can be transmitted), all of the rotational powers of the sun gears. 109, 110 are transmitted to the planetary arms 113, 114 so that the internal gears 115, 116 do not rotate.

On the other hand, in a state that an external load is applied only to the right planetary arm 113 (for example, a reaction force from the work or the like is applied to the finger F1 which is connected to the planetary arm 113 in a way that a power can be transmitted), when the load exceeds the motion resistance of the internal gear 115, the internal gear 115 starts rotating. The rotational power of the sun gear 109 is split into the internal gear 115 so that the left internal gear 116 rotates. (This is true with the case in which a load is applied to only the left planetary arm 114.)

Here, the reduction ratios of respective shafts of the sun gear, the planetary arm and the internal gear of the planetary gear unit will be explained. Table 1 shows the numbers of revolution of respective shafts, in which the number of teeth of the sun gear is "a", and the number of teeth of the internal gear is "c".

### [TABLE 1]

(1) The planetary arm outputs the number of revolution which is a/(a+c) when the internal gear is fixed (the number of revolution is 0), and the number of revolution input into the sun gear is 1.
(2) The internal gear outputs the number of revolution which is -a/c when the planetary arm is fixed (the number of revolution is 0), and the number of revolution input into the sun gear is 1.
(3) The planetary arm outputs the number of revolution which is c/(a+c) when the sun gear is fixed (the number of revolution is 0), and the number of revolution input into the internal gear is 1.
(4) It can be understood by multiplying the value of aforementioned (3) by a/c that the planetary arm outputs the number of revolution which is a/(a+c) when the sun gear is fixed (the number of revolution is 0), and the number of revolution input into the internal gear is a/c.
(5) It can be understood by adding together the values of aforementioned (1) and (4) that the planetary arm outputs the number of revolution which is 2a/(a+c) when the number of revolution input into the sun gear is 1, and the number of revolution input into the internal gear is a/c. Namely, when the rotational power is provided to not only the sun gear but also the internal gear in the same direction, the number of revolution of the planetary arm increases. The present invention uses this principle.

As shown in Figs. 10 and 11, when the output shaft 118 of the motor 117 rotates, in the right planetary gear unit 105, the sun gear 109 rotates while the internal gear 115 is in the state of being stopped so that the right drive shaft 103 rotates as the planetary arm 113 rotates. Moreover, the rotational power of the output shaft 118 of the motor 117 is also transmitted to the left sun gear 110 via the right external gear 119, the intermediate gears 121, 122, the left external gear 120 and the input shaft 108. As a result, in the left planetary gear unit 106, the sun gear 110 rotates while the internal gear 116 is in the state of being stopped so that the left drive shaft 104 rotates as the planetary arm 114 rotates. Thus, the left and right fingers F1, F2 move close to each other so as to perform the grasping motion. In this regard, the number of revolution of the motor 117 is set so as not to make it difficult to insert the fingertip into the narrow gap since the fingers F1, F2 move too fast.

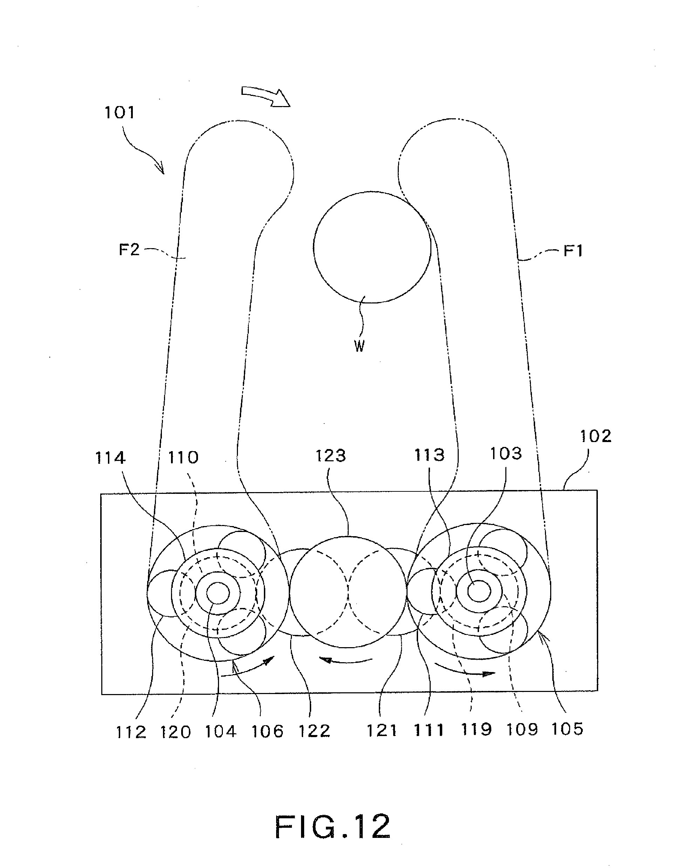

As shown in Fig. 12, if the work W is not positioned at the center between the left and right fingers F1, F2, the work W will make contact with only one finger F1 when the left and right fingers F1, F2 move close to each other. As a result, the planetary arm 113 of the planetary gear unit 105 driving the drive shaft 103 of the finger F1 stops, and the internal gear 115 starts rotating. The rotational power of the internal gear 115 is transmitted to the internal gear 116 of the left planetary gear unit 106 via the intermediate gear 123. In this case, the rotational direction of the internal gear 116 is the direction in which the finger F2 approaches the work W (the direction in which the fingers F1, F2 move close to each other).

When the internal gear 116 rotates like this, the left planetary arm 114 is rotated by both rotational powers of the sun gear 110 and the internal gear 116. In this case, as shown in (5) of Table 1, the number of revolution (speed) of the planetary arm 114 is twice in comparison to the case in which the planetary arm 114 is rotated only by the rotational power of the sun gear 110. Namely, when one finger F1 abuts against the work in advance, the other finger F2 automatically moves faster than before and immediately abuts against the work W.

Therefore, in the case that the rotational power from the motor 117 is reduced by the planetary gear units 105, 106 or the like, there is no need to decrease the reduction ratio in order to increase the moving speed of the fingers F1, F2. As a result, the operational time can be easily shortened without decreasing the force (torque) of the fingers F1, F2 for grasping the work W. Moreover, according to this mechanism, when some external force (e.g., the manually pushing force against the work grasped by the robot hand in the operator-robot cooperative operation) is applied to the finger F1 grasping the work W, the external force is transmitted via the finger F1, the planetary arm 113, the internal gear 115, the intermediate gear 123, the adjacent internal gear 116, the adjacent planetary arm 114, and the adjacent finger F2 in this order. As a result, the grasping forces of the fingers F1, F2 are automatically kept in the uniform state without performing any special controls so that flexible grasping operations can be performed.

### (Fifth Embodiment)

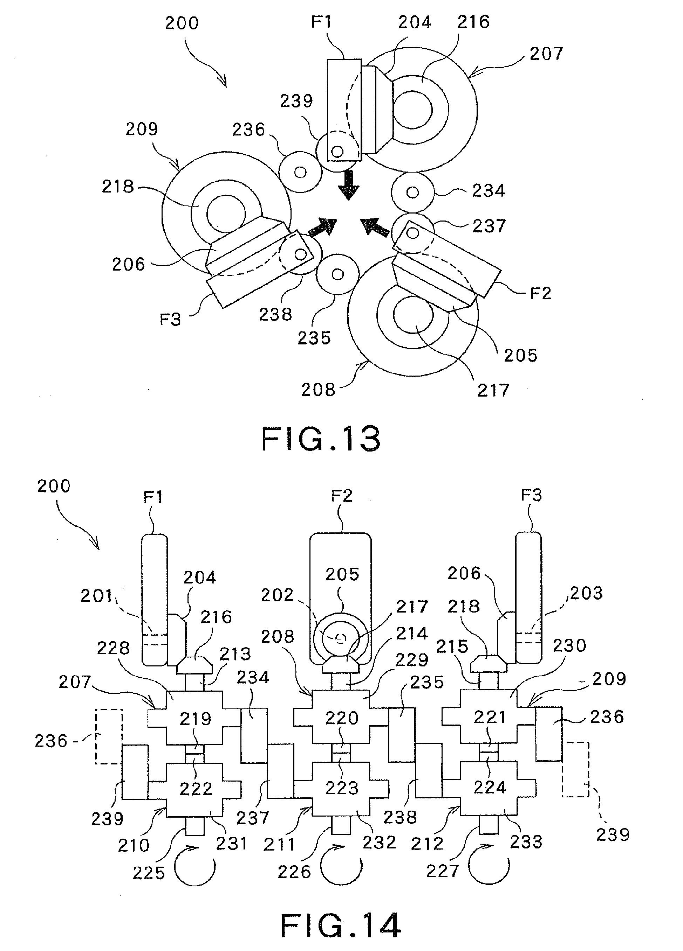

Fig. 13 is a top view of a robot hand 200 according to the fifth embodiment of the present invention according to the second aspect. Fig. 14 is a development view of the robot hand 200 shown in Fig. 13. As shown in Figs. 13 and 14, the robot hand 200 of the present embodiment includes three fingers F1, F2, F3 which are arranged around the central point with an angular interval of 220 degrees, respectively, so as to move close to or away from the central point. The fingers F1, F2, F3 are respectively provided with drive shafts 201-203 to which bevel gears 204-206 are fixed, respectively. Two planetary gear units 207-212 are serially connected to each of the bevel gears 204-206. Incidentally, the planetary gear units 207-212 themselves have the same constitution as that of the fourth embodiment.

Concretely, bevel gears 216-218 are fixed to planetary arms 213-215 of the planetary gear units 207-209 which constitute the rear stage positioned at the downstream side of the power transmitting route. The bevel gears 216-218 are meshed with the bevel gears 204-206 of the fingers F1, F2, F3. Input shafts 219-221 of the planetary gear units 207-209 at the rear stage are integrally connected to planetary arms 222-224 of the planetary gear unit 210-212 which constitute the front stage positioned at the upstream side of the power transmitting route. A power source such as motor is connected to input shafts 225-227 of the planetary gear units 210-212 at the front stage in a way that a power can be transmitted. Each two serially connected planetary gear units 207-212 respectively corresponding to one of the fingers F1, F2, F3 have the rotational axes which are coaxially arranged. The rotational axes of the planetary gear units 207-212 for each of the fingers F1, F2, F3 are arranged in a substantially parallel relationship.

External tooth parts of internal gears 228-230 of the planetary gear units 207-209 at the rear stage corresponding to one of the fingers F1, F2, F3 are connected to external tooth parts of internal gears 232, 233, 231 of the planetary gear units 211, 212, 210 at the front stage corresponding to another one of the fingers F2, F3, F1 adjacent to one of the fingers F1, F2, F3 at one side via intermediate gears 234-239 of an even number (which is two in Figs. 13 and 14). Namely, the internal gears 228-233 of the planetary gear units 207-212 are connected to each other in a way that a power can be circularly transmitted therethrough. In this case, the motion resistances of the internal gears 228-233 are larger than the motion resistances of the planetary arms 213-215, 222-224 which are the first power output parts since the intermediate gears 234-239 are meshed with the internal gears 228-233 which are the second power output parts.

According to the aforementioned constitution, when the input shafts 225-228 of the planetary gear units 210-213 at the front stage are driven, in the planetary gear units 210-212 at the front stage, the sun gears (not shown) rotate while the internal gears 231-233 are kept stopped so that the planetary arms 222-224 rotate. Thereby, the input shafts 219-221 of the planetary gear units 207-209 at the rear stage rotate. Also in the planetary gear units 207-209 at the rear stage, the sun gears (not shown) rotate while the internal gears 228-230 are kept stopped so that the planetary arms 213-215 rotate. Then, the rotational powers of the planetary arms 213-215 drive the drive shafts 201-203 via the bevel gears 216-218, 204-206 so that the fingers F1, F2, F3 move toward the central point to perform the grasping motion.

In this case, if the work is not positioned at the center of the fingers F1, F2, F3, the work may abut against only one finger F1 in advance when the fingers F1, F2, F3 are moving close to each other. Then, the planetary arm 213 of the planetary gear unit 207 at the rear stage which drives the finger F1 is stopped by the reaction force from the work, and the internal gear 228 starts rotating. The rotational power of the internal gear 228 is transmitted via the intermediate gears 234, 237 to the internal gear 232 of the planetary gear unit 211 at the front stage corresponding to the finger F2 which is adjacent to the finger F1 on one side.

When the internal gear 232 rotates like this, the planetary arm 223 of the planetary gear unit 211 at the front stage corresponding to the finger F2 is made to rotate faster than before by the rotational powers of both the sun gear (not shown) and the internal gear 232. When the finger F2 abuts against the work, the planetary arm 214 of the planetary gear unit 229 at the rear stage which drives the finger F2 stops so that the internal gear 229 starts rotating. The rotational power of the internal gear 229 is transmitted via intermediate gears 235, 238 to the internal gear 233 of the planetary gear unit 212 at the front stage corresponding to the finger F3 which is adjacent to the finger F2 on one side. In this case, two rotational powers of the internal gears 228, 229 corresponding to the fingers F1, F2 are transmitted to the internal gear 233 corresponding to the finger F3 so that the internal gear 233 is made to rotate still faster. Thereby, the moving speed of the fingers can be made faster just before completing the grasping operation.

### (Sixth Embodiment)

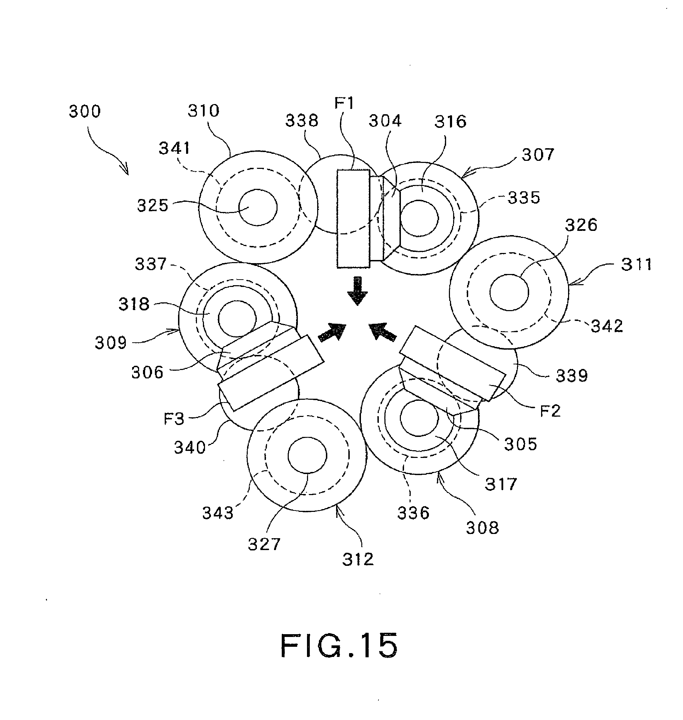

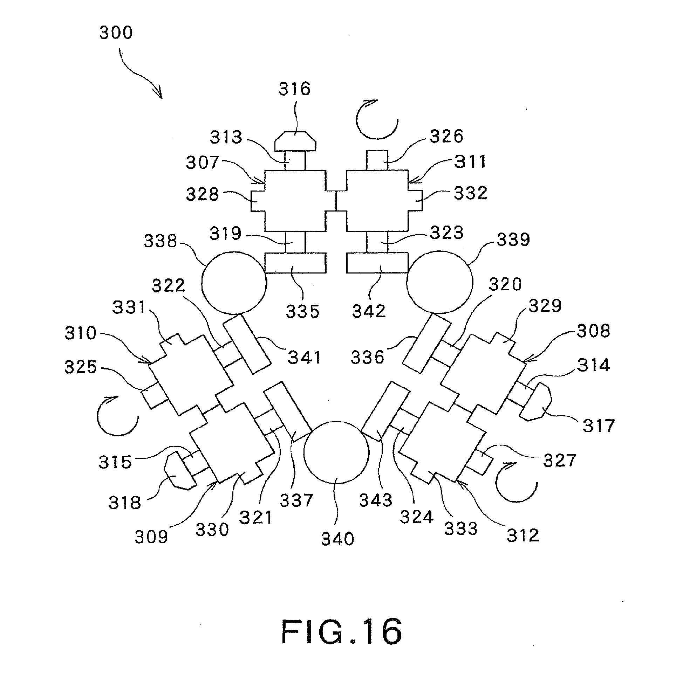

Fig. 15 is a top view of a robot hand 300 according to the sixth embodiment of the present invention according to the second aspect. Fig. 16 is a development view of the robot hand 300 shown in Fig. 15. As shown in Figs. 15 and 16, the robot hand 300 of the present embodiment includes three fingers F1, F2, F3 which are arranged around the central point with an angular interval of 120 degrees, respectively, so as to move close to or away from the central point. Bevel gears 304-306 are fixed to the fingers F1, F2, F3, respectively. Two planetary gear units 307-312 are serially connected to each of the bevel gears 304-306. The serially arranged two planetary gear units 307&310, 308&311, 309&312 include the rotational axes which are substantially parallel to each other and are arranged in the opposite upward/downward directions. The rotational axes of the planetary gear units 307-312 for each of the fingers F1, F2, F3 are also arranged in the substantially parallel relationship. The planetary gear units 307-312 themselves have the same constitution as that of the fourth embodiment.

Concretely, bevel gears 316-318 are fixed to planetary arms 313-315 of the planetary gear units 307-309 which constitute the rear stage at the downstream side of the power transmitting route. The bevel gears 316-318 are meshed with the bevel gears 304-306 of the fingers F1, F2, F3. External gears 335-337 are fixed to input shafts 319-321 of the planetary gear units 307-309 at the rear stage. External gears 341-343 are fixed to planetary arms 322-324 of the planetary gear units 310-312 at the front stage. The external gears 335-337, 341-343 are connected to each other via intermediate gears 338-340 of an odd number (which is one in Figs. 15 and 16). The power source such as a motor is connected to input shafts 325-327 of the planetary gear units 310-312 at the front stage in a way that a power can be transmitted.

External tooth parts of internal gears 328-330 of the planetary gear units 307-309 at the rear stage corresponding to one of the fingers F1, F2, F3 are directly meshed with external tooth parts of the internal gears 332, 333, 331 of the planetary gear units 311, 312, 310 at the front stage corresponding to another one of the fingers F2, F3, F1 which is adjacent to one of the fingers F1, F2, F3 at one side. Namely, the internal gears 328-333 of the planetary gear units 307-312 are connected to each other in a way that a power can be circularly transmitted therethrough. In this case, the motion resistances of the internal gears 328-333 are larger than the motion resistances of the planetary arms 313-315 which are the first power output parts since the internal gears 328-330 of the planetary gear units 307-309 at the rear stage are meshed with the internal gears 332, 334, 331 of the planetary gear units 311, 312, 310 at the front stage. The motion resistances of the internal gears 328-333 are larger than the motion resistances of the planetary arms 313-316 which are the first power output parts.

According to the aforementioned constitution, when the input shafts 325-328 of the planetary gear units 310-313 at the front stage are driven, in the planetary gear units 310-312 at the front stage, the sun gears (not shown) rotate while the internal gears 331-333 are kept stopped so that the planetary arms 322-324 rotate. Thereby, the input shafts 319-321 of the planetary gear units 307-309 at the rear stage rotate. Also in the planetary gear units 307-309 at the rear stage, the sun gears (not shown) rotate while the internal gears 328-330 are kept stopped so that the planetary arms 313-315 rotate. Then, the rotational powers of the planetary arms 313-315 drive the fingers F1, F2, F3 via the bevel gears 316-318, 304-306 so that the fingers F1, F2, F3 move toward the central point to perform the grasping motion.

In this case, if the work is not positioned at the center of the fingers F1, F2, F3, the work may abut against only one finger F1 in advance when the fingers F1, F2, F3 are moving close to each other. Then, the planetary arm 313 of the planetary gear unit 307 at the rear stage which drives the finger F1 is stopped by the reaction force from the work, and the internal gear 328 starts rotating. The rotational power of the internal gear 328 is transmitted to the internal gear 332 of the planetary gear unit 311 at the front stage corresponding to the finger F2 which is adjacent to the finger F1 on one side. Incidentally, the rotational direction of the internal gear 332 corresponds to the direction in which the finger F2 approaches the work.

When the internal gear 332 rotates like this, the planetary arm 323 of the planetary gear unit 311 at the front stage corresponding to the finger F2 is made to rotate faster than before by the rotational powers of both the sun gear (not shown) and the internal gear 332. When the finger F2 abuts against the work, the planetary arm 314 of the planetary gear unit 329 at the rear stage which drives the finger F2 stops so that the internal gear 329 starts rotating. The rotational power of the internal gear 329 is transmitted to the internal gear 333 of the planetary gear unit 312 at the front stage corresponding to the finger F3 which is adjacent to the finger F2 on one side. In this case, two rotational powers of the internal gears 328, 329 corresponding to the fingers F1, F2 are transmitted to the internal gear 333 corresponding to the finger F3 so that the internal gear 333 is made to rotate still faster. Thereby, the moving speed of the fingers can be made faster just before completing the grasping operation.

### (Seventh Embodiment)

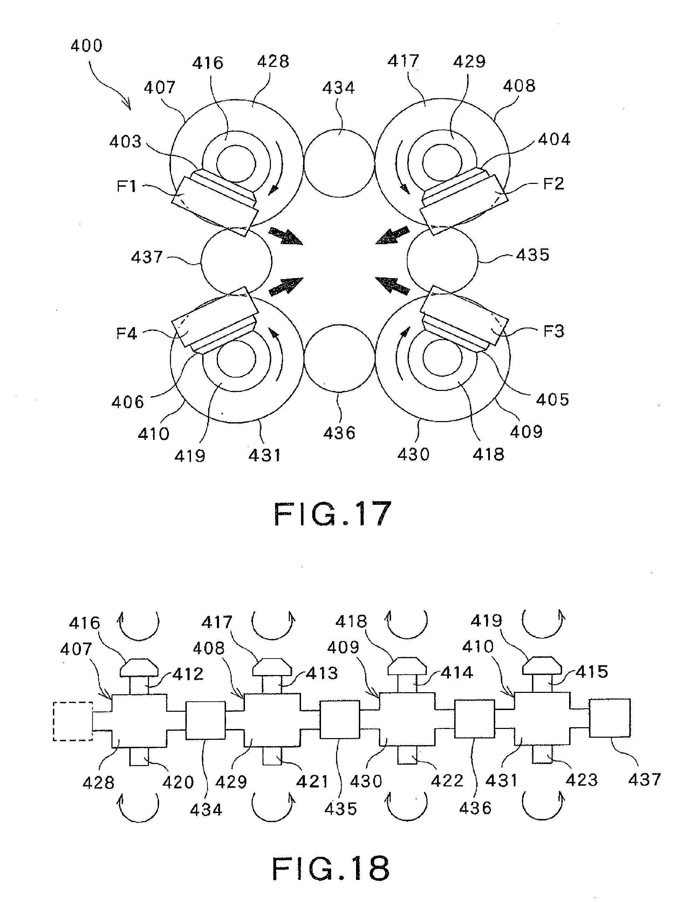

Fig. 17 is a top view of a robot hand 400 according to the seventh embodiment of the present invention according to the second aspect. Fig. 18 is a development view of the robot hand 400 shown in Fig. 17. As shown in Figs. 17 and 18, the robot hand 400 of the present embodiment includes four fingers F1, F2, F3, F4 which are circumferentially arranged with intervals so as to move close to or away from each other. Bevel gears 403-406 are fixed to the fingers F1, F2, F3, F4, respectively. One of the planetary gear units 407-410 is connected to one of the bevel gears 403-406. The four planetary gear units 407-410 are arranged side by side such that their rotational axes are parallel to each other. The planetary gear units 407-410 themselves have the same constitution as that of the fourth embodiment.

Concretely, bevel gears 416-419 are fixed to planetary arms 412-415 of the planetary gear units 407-410. The bevel gears 416-419 are meshed with the bevel gears 403-406 of the fingers F1, F2, F3, F4. The power source such as a motor is connected to input shafts 420-423 of the planetary gear units 407-410 in a way that a power can be transmitted. External tooth parts of internal gears 428-431 of the planetary gear units 407-410 are respectively meshed with external tooth parts of the internal gears 428-431 of adjacent planetary gear units 407-410 via intermediate gears 434-437 of an odd number (which is one in Figs. 17 and 18). Namely, the internal gears 428-431 of the planetary gear units 407-410 are connected to each other in a way that a power can be circularly transmitted therethrough. In this case, the motion resistances of the internal gears 428-431 are larger than the motion resistances of the planetary arms 412-415 which are the first power output parts since adjacent internal gears 428-431 of the planetary gear units 407-410 are meshed with each other,

According to the aforementioned constitution, when the input shafts 420-423 of the planetary gear units 407-410 are driven, the sun gears (not shown) rotate while the internal gears 428-431 are kept stopped so that the planetary arms 412-415 rotate. Thereby, the fingers F1, F2, F3, F4 are driven via the bevel gears 416-419 so that the fingers F1, F2, F3, F4 move toward the central point to perform the grasping motion.

In this case, if the work is not positioned at the center of the fingers F1, F2, F3, F4, the work may abut against only one finger F1 in advance when the fingers F1, F2, F3, F4 are moving close to each other. Then, the planetary arm 412 of the planetary gear unit 407 which drives the finger F1 is stopped by the reaction force from the work, and the internal gear 428 starts rotating. The rotational power of the internal gear 428 is transmitted to the internal gears 429, 431 of adjacent planetary gear units 408, 410 so that adjacent fingers F2, F4 are made to rotate faster than before. Thereby, the moving speed of the fingers can be made faster just before completing the grasping operation with a compact constitution.

Incidentally, the input shafts 225-227, 325-327, 420-423 of the planetary gear units 210-213, 310-313, 407-410 may be individually driven by a plurality of motors, or by a single motor like the fourth embodiment.

By the way, the constitution in which a power circulates through the internal gears of respective planetary gear units is not essential to obtain the advantageous effects of the present invention. Namely, in the fourth to seventh embodiments mentioned above, a constitution in which a power does not circulate through the internal gears may be adopted. For example, in Fig. 14 of the fifth embodiment, the intermediate gear 236 may be omitted so that a power does not circulate between the internal gear 209 and the internal gear 210. Even in this case, respective internal gears are connected in a way that a power can be transmitted so that the advantageous effects of the present invention can be obtained.

Other than the aforementioned method, various methods may be adopted in order to make a constitution in which a power does not circulate through the internal gears of respective planetary gear units. In this case, the symmetric arrangements of respective planetary gear units realized in the fourth to seventh embodiments may seem to be lost, but actually the aforementioned symmetric arrangements can be achieved by choosing appropriate gear constitutions.

### (Eighth Embodiment)

The splitting of the power can be realized also in the following constitution. Namely, in the case that two drive parts shown in Fig. 11 exist, the power of the motor 117 of the first drive part can be split into three output portions of the drive shafts 103, 104 of the second drive part and the drive shaft 103 of the first drive part by replacing the motor 117 of the second drive part and the output shaft 118 of the motor 117 with the drive shaft 104 of the first drive part.

Moreover, by repeating such a replacement, the power can be split into output shafts of any number. Furthermore, the reduction ratio between the respective output shafts into which the power is split and the output shaft of the motor can be freely set by choosing an appropriate gear constitution.

As another embodiment, the power splitting constitution having the second aspect of the present invention may be incorporated into the robot hand including a plurality of fingers having the first aspect of the present invention, so that a robot hand having both the first and second aspects of the present invention can be realized. For example, the drive shafts 103, 104 of the fourth embodiment shown in Fig. 11 may be connected as input shafts to two planetary gear units 44 which respectively drive two fingers of the first embodiment.

### INDUSTRIAL APPLICABILITY

As mentioned above, the robot hand of the present invention according to the first aspect can make it possible that the finger can be bent from the finger root to the fingertip in this order without performing any special controls, and the present invention can be beneficially applied to various robot hands to be attached to the distal end of the arm of industrial robot.

As mentioned above, the robot hand of the present invention according to the second aspect can easily shorten the operational time without decreasing the grasping force and perform flexible grasping motions, and the present invention can be beneficially applied to various robot hands to be attached to the distal end of the arm of industrial robot.

**[TABLE 1]**

| | | Sun Gear | Internal Gear | Planetary Arm |
|---|---|---|---|---|
| (1) | The number of revolution when the internal gear is fixed, and 1 is input into the sun gear. | 1 | 0 | a/(a+c) |
| (2) | The number of revolution when the planetary arm is fixed, and 1 is input into the sun gear. | 1 | -a/c | 0 |
| (3) | The number of revolution when the sun gear is fixed, and 1 is input into the internal gear. | 0 | 1 | c/(a+c) |
| (4) | The number of revolution when the sun gear is fixed, and a/c is input into the internal gear. | 0 | a/c | a/(a+c) |
| (5) | The number of revolution when 1 is input into the sun gear, and a/c is input into the internal gear. | 1 | a/c | 2a/(a+c) |

| | | | | |
|---|---|---|---|---|
| a: Number of teeth of sun gear c: Number of teeth of internal gear | | | | |

## Claims

1. A robot hand, comprising:
a planetary gear unit (44) to which a rotational power from a power source (31) is input;
first and second drive shafts (3,4) to which a rotational power output from the planetary gear unit is transmitted; and
a finger (F1) including a first joint (9) driven by the first drive shaft (3), a first finger element (12) mounted on a fingertip side of the first joint, a second joint (13) mounted on a fingertip side of the first finger element and driven by the second drive shaft (4), and a second finger element (15) mounted on a fingertip side of the second joint;
wherein the planetary gear unit (44) includes a sun gear (65), a planetary gear (66) meshing with external teeth of the sun gear, a planetary arm (68) connected to the planetary gear so as to move coordinately with a rotation of the planetary gear around the sun gear, an internal gear (67) meshing with external teeth of the planetary gear so as to move coordinately with a rotation of the planetary gear on its own axis,
wherein one of the sun gear (65), the planetary arm (68) and the internal gear (67) is used as a power input part, and remaining two thereof are respectively used as a first power output part and a second power output part,
wherein the power input part is connected to the power source in a way that a power can be transmitted,
wherein the first power output part is connected to the first drive shaft (3) in a way that a power can be transmitted,
wherein the second power output part is connected to the second drive shaft (4) in a way that a power can be transmitted, and
wherein the robot hand is further provided with a resistance generating unit configured to make a motion resistance of the second power output part lager than a motion resistance of the first power output part.

2. The robot hand according to claim 1, wherein the motion resistances are set in a way that the second power output part will become movable after the first power output part has become unmovable, and
wherein when the rotational power is transmitted to the power input part, the second finger element (15) will move toward a work after the first finger element (12) has become unmovable due to a resistance force from the work.

3. The robot hand according to claim 1 or 2, wherein the resistance generating unit is configured by setting a power transmitting resistance in a second power transmitting mechanism from the second power output part to the second drive shaft larger than a power transmitting resistance in a first power transmitting mechanism from the first power output part to the first drive shaft.

4. The robot hand according to claim 1 or 2, wherein the resistance generating unit comprises a ball plunger (70) configured to apply a contact resistance to a member (46) existing in a power transmitting mechanism from the second power output part to the second drive shaft.

5. The robot hand according to claim 1 or 2, wherein the resistance generating unit comprises a spring (115) configured to apply a rotational resistance to a member (53) existing in a power transmitting mechanism from the second power output part to the second drive shaft.

6. The robot hand according to any one of claims 1 to 5, wherein a second planetary gear unit (44A) is disposed between the first or second power output part and the first or second drive shaft,
wherein the first or second power output part is connected to a power input part of the second planetary gear unit in a way that a power can be transmitted,
wherein the first or second drive shaft is connected to a first power output part of the second planetary gear unit in a way that a power can be transmitted,
wherein a third drive shaft is connected to a second power output part of the second planetary gear unit in a way that a power can be transmitted.

7. A robot hand, comprising:
a plurality of fingers (F1,F2); and
a plurality of planetary gear units (105,106) configured to respectively transmit powers to the plurality of fingers,
wherein the planetary gear unit includes a sun gear (109,110), a planetary gear (111,112) meshing with external teeth of the sun gear, a planetary arm (113,114) connected to the planetary gear so as to move coordinately with a rotation of the planetary gear around the sun gear, an internal gear (115,116) meshing with external teeth of the planetary gear so as to move coordinately with a rotation of the planetary gear on its own axis,
wherein one of the sun gear, the planetary arm and the internal gear is used as a power input part, and remaining two thereof are respectively used as a first power output part and a second power output part,
wherein the power input part of the plurality of planetary gear units (105,106) is connected to a power source in a way that a power can be transmitted, the first power output part of one of the plurality of planetary gear units is connected to one of the plurality of fingers in a way that a power can be transmitted, the first power output part of another one of the plurality of planetary gear units is connected to another one of the plurality of fingers in a way that a power can be transmitted,
wherein the second power output part of one of the plurality of planetary gear units is connected to the second power output part of another one of the plurality of planetary gear units such that the fingers move close to or away from each other by a transmitted power.

8. The robot hand according to claim 7, wherein the plurality of fingers include three or more fingers,
wherein two or more planetary gear units are serially arranged per one finger,
wherein the second power output part of one of serially arranged planetary gear units is connected to the second power output part of one of adjacent another serially arranged planetary gear units in a way that a power can be transmitted,
wherein the second power output part of another one of the serially arranged planetary gear units is connected to the second power output part of one of oppositely adjacent still another serially arranged planetary gear units in a way that a power can be transmitted,
wherein the second power output parts of the plurality of planetary gear units respectively driving the plurality of fingers are connected to each other in a way that a power can be circularly transmitted to each other.

9. The robot hand according to claim 8, wherein two serially arranged planetary gear units are arranged side by side in way that rotational shafts thereof are parallel and opposite to each other, and an external tooth part is integrally disposed on the second power output part, and
wherein the external tooth part of the second power output part of an upstream side planetary gear unit among the serially arranged planetary gear units meshes with the external tooth part of the second power output part of a downstream side planetary gear unit among adjacent still another serially arranged planetary gear units.

10. The robot hand according to claim 7, wherein the fingers and the planetary gear units driving the fingers (F1-F4) are respectively disposed in an even number of four or more,
wherein the second power output parts of four planetary gear units (407-410) are connected in a way that a power can be circularly transmitted therethrough via intermediate gears.

## Patentansprüche

1. Roboterhand, aufweisend:
eine Planetengetriebeeinheit (44), der eine Drehkraft von einer Kraftquelle (31) zugeführt wird;
erste und zweite Antriebswellen (3, 4), an die ein Drehkraftabtrieb von der Planetengetriebeeinheit übertragen wird; und
einen Finger (F1), der ein erstes Gelenk (9), das durch die erste Antriebswelle (3) angetrieben wird, ein erstes Fingerelement (12), das auf einer Fingerspitzenseite des ersten Gelenks montiert ist, ein zweites Gelenk (13), das auf einer Fingerspitzenseite des ersten Fingerelements montiert ist und durch die zweite Antriebswelle (4) angetrieben wird, und ein zweites Fingerelement (15) beinhaltet, das auf einer Fingerspitzenseite des zweiten Gelenks montiert ist;
wobei die Planetengetriebeeinheit (44) beinhaltet: ein Sonnenrad (65), ein Planetenrad (65), das mit einer Außenverzahnung des Sonnenrades in Verzahnungseingriff ist, einen Planetenarm (68), der mit dem Planetenrad verbunden ist, so dass er sich koordiniert mit einer Rotation des Planetenrades um das Sonnenrad bewegt, ein Innenzahnrad (67), das mit einer Außenverzahnung des Planetenrades in Verzahnungseingriff ist, so dass es sich koordiniert mit einer Rotation des Planetenrades um seine eigene Achse bewegt,
wobei eines von dem Sonnenrad (65), dem Planetenarm (68) und dem Innenzahnrad (67) als Krafteingangsteil verwendet wird, und die verbleibenden zwei von diesen als erster Kraftausgangsteil bzw. als zweiter Kraftausgangsteil verwendet werden,
wobei der Krafteingangsteil mit der Kraftquelle in einer Weise verbunden ist, dass eine Kraft übertragen werden kann,
wobei der erste Kraftausgangsteil mit der ersten Antriebswelle (3) in einer Weise verbunden ist, dass eine Kraft übertragen werden kann,
wobei der zweite Kraftausgangsteil mit der zweiten Antriebswelle (4) in einer Weise verbunden ist, dass eine Kraft übertragen werden kann, und
wobei die Roboterhand weiter mit einer Widerstandserzeugungseinheit versehen ist, die konfiguriert ist, um einen Bewegungswiderstand des zweiten Kraftausgangsteils größer als einen Bewegungswiderstand des ersten Kraftausgangsteils zu machen.

2. Roboterhand nach Anspruch 1, wobei die Bewegungswiderstände in einer Weise eingestellt sind, dass der zweite Kraftausgangsteil bewegbar wird, nachdem der erste Kraftausgangsteil unbewegbar geworden ist, und
wobei, wenn die Drehkraft an den Krafteingangsteil übertragen wird, das zweite Fingerelement (15) sich hin zu einem Werkstück bewegt, nachdem das erste Fingerelement (12), aufgrund einer Widerstandskraft vom Werkstück, unbewegbar geworden ist.

3. Roboterhand nach Anspruch 1 oder 2, wobei die Widerstandserzeugungseinheit dadurch konfiguriert ist, dass ein Kraftübertragungswiderstand in einem zweiten Kraftübertragungsmechanismus vom zweiten Kraftausgangsteil zur zweiten Antriebswelle größer eingestellt wird als ein Kraftübertragungswiderstand in einem ersten Kraftübertragungsmechanismus vom ersten Kraftausgangsteil zur ersten Antriebswelle.

4. Roboterhand nach Anspruch 1 oder 2, wobei die Widerstandserzeugungseinheit einen Kugelpressstößel (70) aufweist, der konfiguriert ist, einen Kontaktwiderstand auf ein Element (46) aufzubringen, das in einem Kraftübertragungsmechanismus vom zweiten Kraftausgangsteil zur zweiten Antriebswelle vorhanden ist.

5. Roboterhand nach Anspruch 1 oder 2, wobei die Widerstandserzeugungseinheit eine Feder (115) aufweist, die konfiguriert ist, einen Drehwiderstand auf ein Element (53) aufzubringen, das in einem Kraftübertragungsmechanismus vom zweiten Kraftausgangsteil zur zweiten Antriebswelle vorhanden ist.

6. Roboterhand nach einem der Ansprüche 1 bis 5, wobei eine zweite Planetengetriebeeinheit (44A) zwischen dem ersten oder zweiten Kraftausgangsteil und der ersten oder zweiten Antriebswelle angeordnet ist,
wobei der erste oder zweite Kraftausgangsteil mit einem Krafteingangsteil der zweiten Planetengetriebeeinheit in einer Weise verbunden ist, dass eine Kraft übertragen werden kann,
wobei die erste oder zweite Antriebswelle mit einem ersten Kraftausgangsteil der zweiten Planetengetriebeeinheit in einer Weise verbunden ist, dass eine Kraft übertragen werden kann,
wobei eine dritte Antriebswelle mit einem zweiten Kraftausgangsteil der zweiten Planetengetriebeeinheit in einer Weise verbunden ist, dass eine Kraft übertragen werden kann.

7. Roboterhand, aufweisend:
eine Mehrzahl von Fingern (F1, F2); und
eine Mehrzahl von Planetengetriebeeinheiten (105, 106), die konfiguriert sind, um jeweils Kräfte an die Mehrzahl von Fingern zu übertragen,
wobei die Planetengetriebeeinheit beinhaltet: ein Sonnenrad (109, 110), ein Planetenrad (111, 112), das mit einer Außenverzahnung des Sonnenrades in Verzahnungseingriff ist, einen Planetenarm (113, 114), der mit dem Planetenrad verbunden ist, so dass er sich koordiniert mit einer Rotation des Planetenrades um das Sonnenrad bewegt, ein Innenzahnrad (115, 116), das mit einer Außenverzahnung des Planetenrades in Verzahnungseingriff ist, so dass es sich koordiniert mit einer Rotation des Planetenrades um seine eigene Achse bewegt,
wobei eines von dem Sonnenrad, dem Planetenarm und dem Innenzahnrad als Krafteingangsteil verwendet wird, und die verbleibenden zwei von diesen als erster Kraftausgangsteil bzw. als zweiter Kraftausgangsteil verwendet werden,
wobei der Krafteingangsteil der Mehrzahl von Planetengetriebeeinheiten (105, 106) mit einer Kraftquelle in einer Weise verbunden ist, dass eine Kraft übertragen werden kann,
der erste Kraftausgangsteil von einer von der Mehrzahl von Planetengetriebeeinheiten mit einem von der Mehrzahl von Fingern in einer Weise verbunden ist, dass eine Kraft übertragen werden kann, der erste Kraftausgangsteil von einer weiteren von der Mehrzahl von Planetengetriebeeinheiten mit einem weiteren von der Mehrzahl von Fingern in einer Weise verbunden ist, dass eine Kraft übertragen werden kann,
wobei der zweite Kraftausgangsteil von einer von der Mehrzahl von Planetengetriebeeinheiten mit dem zweiten Kraftausgangsteil von einer weiteren von der Mehrzahl von Planetengetriebeeinheiten verbunden ist, derart, dass die Finger durch eine übertragene Kraft nahe zueinander hin oder weg voneinander bewegt werden .

8. Roboterhand nach Anspruch 7, wobei die Mehrzahl von Fingern drei oder mehr Finger beinhalten,
wobei je einem Finger zwei oder mehr Planetengetriebeeinheiten seriell angeordnet sind, wobei der zweite Kraftausgangsteil von einer der seriell angeordneten Planetengetriebeeinheiten mit dem zweiten Kraftausgangsteil von einer von benachbarten weiteren seriell angeordneten Planetengetriebeeinheiten in einer Weise verbunden ist, dass eine Kraft übertragen werden kann,
wobei der zweite Kraftausgangsteil einer weiteren der seriell angeordneten Planetengetriebeeinheiten mit dem zweiten Kraftausgangsteil von einer von gegenüberliegend benachbarten noch weiteren seriell angeordneten Planetengetriebeeinheiten in einer Weise verbunden ist, dass eine Kraft übertragen werden kann,
wobei die zweiten Kraftausgangsteile der Mehrzahl von Planetengetriebeeinheiten, die jeweils die Mehrzahl von Fingern antreiben, miteinander in einer Weise verbunden sind, dass eine Kraft in zirkularer Weise zueinander übertragen werden kann.

9. Roboterhand nach Anspruch 8, wobei zwei seriell angeordnete Planetengetriebeeinheiten nebeneinander in einer Weise angeordnet sind, dass Drehachsen von diesen parallel und entgegengesetzt zueinander sind, und ein Außenverzahnungsteil in integraler Weise auf dem zweiten Kraftausgangsteil angeordnet ist, und
wobei der Außenverzahnungsteil des zweiten Kraftausgangsteils einer in Übertragungsrichtung davor befindlichen Planetengetriebeeinheit der seriell angeordneten Planetengetriebeeinheiten mit dem Außenverzahnungsteil des zweiten Kraftausgangsteils einer in Übertragungsrichtung dahinter befindlichen Planetengetriebeeinheit benachbarter noch weiterer seriell angeordneter Planetengetriebeeinheiten in Verzahnungseingriff ist.

10. Roboterhand nach Anspruch 7, wobei die Finger und die Planetengetriebeeinheiten, welche die Finger (F1-F4) antreiben, jeweils in einer geradzahligen Anzahl von vier oder mehr angeordnet sind,
wobei die zweiten Kraftausgangsteile von vier Planetengetriebeeinheiten (407-410) in einer Weise verbunden sind, dass eine Kraft in zirkularer Weise durch diese hindurch übertragen werden kann, und zwar über Zwischenzahnräder.

## Revendications

1. Main de robot, comprenant :
une unité (44) de satellite dans laquelle est entrée une puissance de rotation provenant d'une source d'alimentation (31) ;
des premier et deuxième arbres d'entraînement (3, 4) auxquels est transmise une puissance de rotation sortie de l'unité de satellite ; et
un doigt (F1) comprenant une première articulation (9) entraînée par le premier arbre d'entraînement (3), un premier élément (12) de doigt monté sur un côté de bout de doigt de la première articulation, une deuxième articulation (13) montée sur un côté de bout de doigt du premier élément de doigt et entraînée par le deuxième arbre d'entraînement (4), et un deuxième élément (15) de doigt monté sur un côté de bout de doigt de la deuxième articulation ;
dans laquelle l'unité (44) de satellite comprend un planétaire (65), un satellite (66) s'emboîtant avec les dents externes du planétaire, un bras planétaire (68) relié au satellite de manière à se déplacer de façon coordonnée avec une rotation du satellite autour du planétaire, un engrenage interne (67) s'emboîtant avec les dents externes du satellite de manière à se déplacer de façon coordonnée avec une rotation du satellite sur son propre axe,
dans laquelle un élément parmi le planétaire (65), le bras planétaire (68) et l'engrenage interne (67) est utilisé comme partie d'entrée de puissance, et les deux autres éléments sont respectivement utilisés comme première partie de sortie de puissance et deuxième partie de sortie de puissance,
dans laquelle la partie d'entrée de puissance est reliée à la source d'alimentation d'une manière pouvant transmettre une puissance,
dans laquelle la première partie de sortie de puissance est reliée au premier arbre d'entraînement (3) d'une manière pouvant transmettre une puissance,
dans laquelle la deuxième partie de sortie de puissance est reliée au deuxième arbre d'entraînement (4) d'une manière pouvant transmettre une puissance, et
dans laquelle la main de robot est en outre pourvue d'une unité de génération de résistance conçue pour rendre une résistance au mouvement de la deuxième partie de sortie de puissance plus importante qu'une résistance au mouvement de la première partie de sortie de puissance.

2. Main de robot selon la revendication 1, dans laquelle les résistances au mouvement sont établies de manière à ce que la deuxième partie de sortie de puissance devienne mobile une fois que la première partie de sortie de puissance est devenue immobile, et
dans laquelle, quand la puissance de rotation est transmise à la partie d'entrée de puissance, le deuxième élément (15) de doigt se déplace vers une pièce après que le premier élément (12) de doigt est devenu immobile en raison d'une force de résistance provenant de la pièce.

3. Main de robot selon la revendication 1 ou 2, dans laquelle l'unité de génération de résistance est conçue en réglant une résistance à la transmission de puissance dans un deuxième mécanisme de transmission de puissance depuis la deuxième partie de sortie de puissance vers le deuxième arbre d'entraînement pour qu'elle soit plus importante qu'une résistance à la transmission de puissance dans un premier mécanisme de transmission de puissance depuis la première partie de sortie de puissance vers le premier arbre d'entraînement.

4. Main de robot selon la revendication 1 ou 2, dans laquelle l'unité de génération de résistance comprend un plongeur (70) à bille conçu pour appliquer une résistance de contact à un organe (46) existant dans un mécanisme de transmission de puissance depuis la deuxième partie de sortie de puissance vers le deuxième arbre d'entraînement.

5. Main de robot selon la revendication 1 ou 2, dans laquelle l'unité de génération de résistance comprend un ressort (115) conçu pour appliquer une résistance rotative à un organe (53) existant dans un mécanisme de transmission de puissance depuis la deuxième partie de sortie de puissance vers le deuxième arbre d'entraînement.

6. Main de robot selon l'une quelconque des revendications 1 à 5, dans laquelle une deuxième unité (44A) de satellite est disposée entre la première ou deuxième partie de sortie de puissance et le premier ou deuxième arbre d'entraînement,
dans laquelle la première ou deuxième partie de sortie de puissance est reliée à une partie d'entrée de puissance de la deuxième unité de satellite d'une manière pouvant transmettre une puissance,
dans laquelle le premier ou deuxième arbre d'entraînement est relié à une première partie de sortie de puissance de la deuxième unité de satellite d'une manière pouvant transmettre une puissance,
dans laquelle un troisième arbre d'entraînement est relié à une deuxième partie de sortie de puissance de la deuxième unité de satellite d'une manière pouvant transmettre une puissance.

7. Main de robot, comprenant :
une pluralité de doigts (F1, F2) ; et
une pluralité d'unités (105, 106) de satellite conçues pour transmettre respectivement des puissances à la pluralité de doigts,
dans laquelle l'unité de satellite comprend un planétaire (109, 110), un satellite (111, 112) s'emboîtant avec les dents externes du planétaire, un bras planétaire (113, 114) relié au satellite de manière à se déplacer de façon coordonnée avec une rotation du satellite autour du planétaire, un engrenage interne (115, 116) s'emboîtant avec les dents externes du satellite de manière à se déplacer de façon coordonnée avec une rotation du satellite sur son propre axe,
dans laquelle un élément parmi le planétaire, le bras planétaire et l'engrenage interne est utilisé comme partie d'entrée de puissance, et les deux autres éléments sont respectivement utilisés comme première partie de sortie de puissance et deuxième partie de sortie de puissance,
dans laquelle la partie d'entrée de puissance de la pluralité d'unités (105, 106) de satellite est reliée à une source d'alimentation de manière à pouvoir transmettre une puissance, la première partie de sortie de puissance d'une unité de la pluralité d'unités de satellite est reliée à un doigt de la pluralité de doigts de manière à pouvoir transmettre une puissance, la première partie de sortie de puissance d'une autre unité de la pluralité d'unités de satellite est reliée à un autre doigt de la pluralité de doigts de manière à pouvoir transmettre une puissance,
dans laquelle la deuxième partie de sortie de puissance d'une unité de la pluralité d'unités de satellite est reliée à la deuxième partie de sortie de puissance d'une autre unité de la pluralité d'unités de satellite de sorte que les doigts se rapprochent ou s'éloignent les uns des autres par une puissance transmise.

8. Main de robot selon la revendication 7, dans laquelle la pluralité de doigts comprend trois doigts ou plus,
dans laquelle deux unités de satellite ou plus sont agencées en série par doigt,
dans laquelle la deuxième partie de sortie de puissance d'une des unités de satellite agencées en série est reliée à la deuxième partie de sortie de puissance d'une des autres unités de satellite agencées en série adjacentes de manière à pouvoir transmettre une puissance,
dans laquelle la deuxième partie de sortie de puissance d'une autre des unités de satellite agencées en série est connectée à la deuxième partie de sortie de puissance d'une d'encore d'autres unités de satellite agencées en série adjacentes opposées de manière à transmettre une puissance,
dans laquelle les deuxièmes parties de sortie de puissance de la pluralité d'unités de satellite entraînant respectivement la pluralité de doigts sont reliées mutuellement de manière à ce qu'une puissance puisse être transmise de façon circulaire de l'une à l'autre.

9. Main de robot selon la revendication 8, dans laquelle deux unités de satellite agencées en série sont agencées côte à côte de manière à ce que leurs arbres rotatifs soient mutuellement parallèles et opposés, et une partie de dent externe est disposée de façon intégrante sur la deuxième partie de sortie de puissance, et
dans laquelle la partie de dent externe de la deuxième partie de sortie de puissance d'une unité de satellite côté amont parmi les unités de satellite agencées en série s'emboîte avec la partie de dent externe de la deuxième partie de sortie de puissance d'une unité de satellite côté aval parmi encore d'autres unités de satellite agencées en série adjacentes.

10. Main de robot selon la revendication 7, dans laquelle les doigts et les unités de satellite entraînant les doigts (F1-F4) sont respectivement disposés en un nombre pair de quatre ou plus,
dans laquelle les deuxièmes parties de sortie de puissance de quatre unités (407-410) de satellite sont reliées de manière à ce qu'une puissance puisse être transmise de façon circulaire dans celles-ci par le biais d'engrenages intermédiaires.
